# EUROPÄISCHE PATENTSCHRIFT

(11) **EP 0 693 538 B1**
(45) Veröffentlichungstag und Bekanntmachung des Hinweises auf die Patenterteilung: **22.08.2001**
(21) Anmeldenummer: 95810387.1
(22) Anmeldetag: 12.06.1995
(51) Int. Cl.: C09B 67/22, C09B 43/16

(54) **Azofarbstoffe, Verfahren zu deren Herstellung und deren Verwendung**
Azodyes, process for their manufacturing and their use
Mélanges de colorants azoiques, procédé pour leur fabrication et leur utilisation

(30) Priorität: 20.06.1994 CH 195294
(43) Veröffentlichungstag der Anmeldung: 24.01.1996
(73) Patentinhaber: Ciba Specialty Chemicals Holding Inc., 4057 Basel (CH)
(72) Erfinder: Lauk, Urs, Dr., CH-8047 Zürich (CH)

(56) Entgegenhaltungen:
- EP-A- 0 116 513
- EP-A- 0 357 560
- EP-A- 0 465 420
- EP-A- 0 548 014
- EP-A- 0 549 529
- DE-A- 3 440 777
- GB-A- 2 266 893
- NL-C- 55 496

## Beschreibung

Die vorliegende Erfindung betrifft neue Azofarbstoffe, Verfahren zu deren Herstellung sowie deren Verwendung zum Färben und Bedrucken von Fasermaterialien, insbesondere von textilen Fasermaterialien.

Die der vorliegenden Erfindung zugrunde liegende Aufgabe war es, Farbstoffe zu finden, welche zum Färben von stickstoffhaltigen und hydroxygruppenhaltigen Fasermaterialien, insbesondere von cellulosischen Fasermaterialien, geeignet sind, gute Echtheitseigenschaften aufweisen und hochtemperaturstabil sind.
Aus der EP-A-0 548 014 sind anionische Farbstoffe bekannt, welche einen durch Morpholino substituierten s-Triazinrest enthalten.

Es wurde nun gefunden, dass die nachstehenden Azofarbstoffe diesen Anforderungen genügen.

Gegenstand der vorliegenden Erfindung sind anionische Säurefarbstoffe der Formel 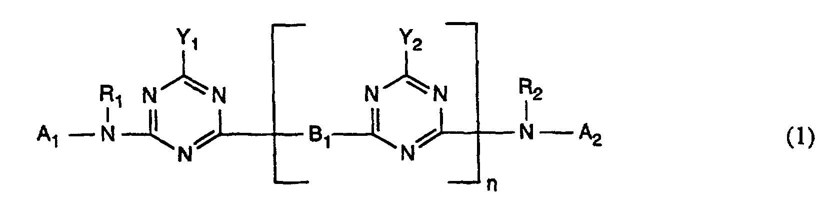 worin
R₁ und R₂ unabhängig voneinander Wasserstoff oder C₁-C₄-Alkyl bedeuten,
B₁ ein Brückenglied der Formel

   -NR₉-E₂-NR₁₀- (5a),

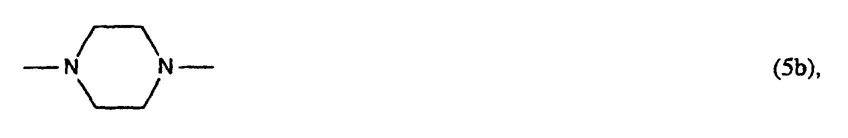

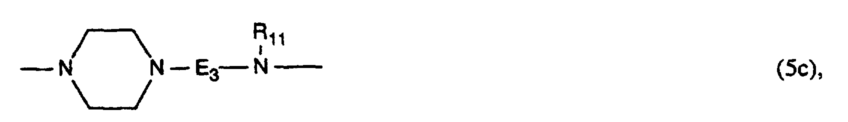

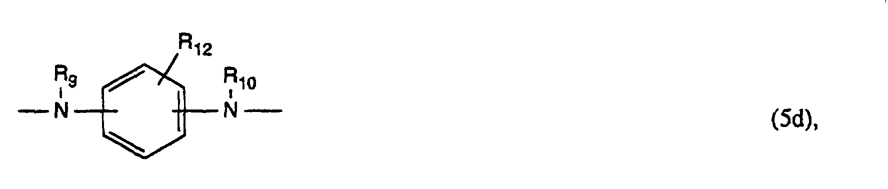

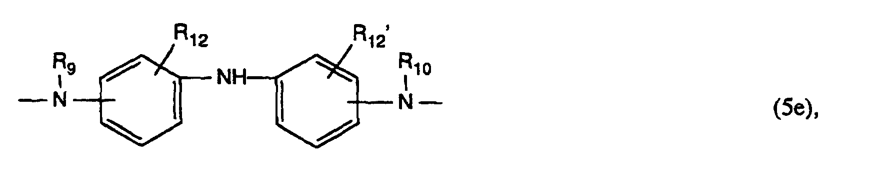

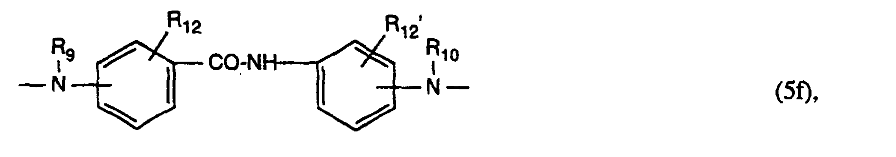

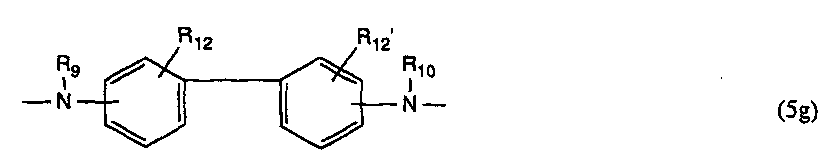

   oder 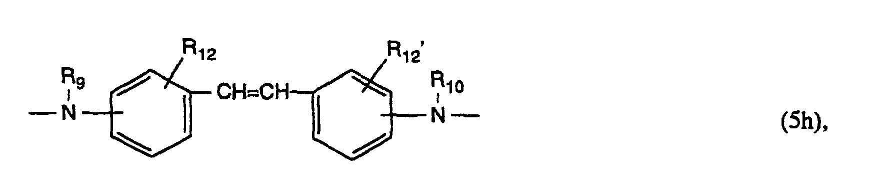 worin
R₉, R₁₀ und R₁₁ unabhängig voneinander Wasserstoff oder gegebenenfalls durch Hydroxy oder C₁-C₄-Alkoxy substituiertes C₁-C₈-Alkyl sind,
R₁₂ und R₁₂' unabhängig voneinander für Wasserstoff, C₁-C₄-Alkyl, C₁-C₄-Alkoxy, C₂-C₄-Alkanoylamino, Halogen, Sulfo oder Carboxy stehen und
E₂ und E₃ unabhängig voneinander gegebenenfalls durch Hydroxy oder C₁-C₄-Alkoxy substituiertes und gegebenenfalls durch eine oder mehrere Gruppen -O- unterbrochenes C₂-C₈-Alkylen oder gegebenenfalls im Cycloalkylring durch C₁-C₄-Alkyl substituiertes C₅-C₇-Cycloalkylen, C₅-C₇-Cycloalkylen-C₁-C₈-Alkylen oder C₁-C₈-Alkylen-C₅-C₇-Cycloalkylen sind,
A₁ und A₂ unabhängig voneinander der Rest der Formel 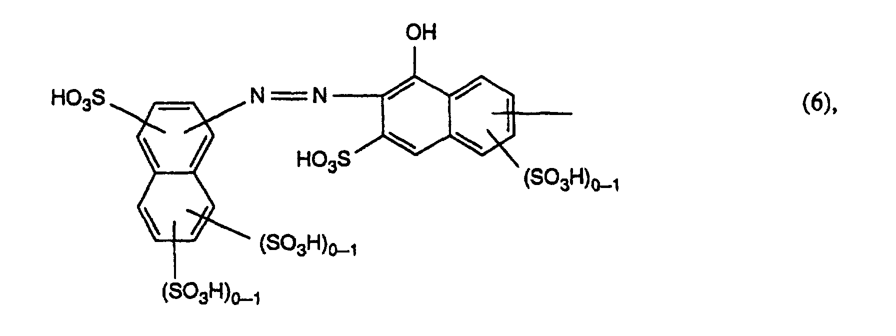 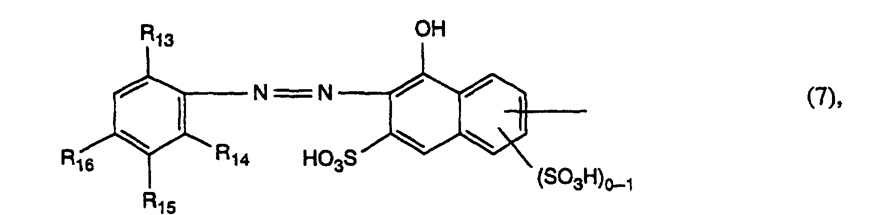 worin R₁₃, R₁₄, R₁₅ und R₁₆ unabhängig voneinander Wasserstoff, Sulfo, Carboxy, Carbamoyl, Halogen, Cyano, Ureido, unsubstituiertes oder durch Hydroxy substituiertes C₁-C₄-Alkyl oder C₁-C₄-Alkoxy, oder unsubstituiertes oder im Alkylteil durch Hydroxy oder C₁-C₄-Alkoxy substituiertes C₂-C₄-Alkanoylamino bedeuten; 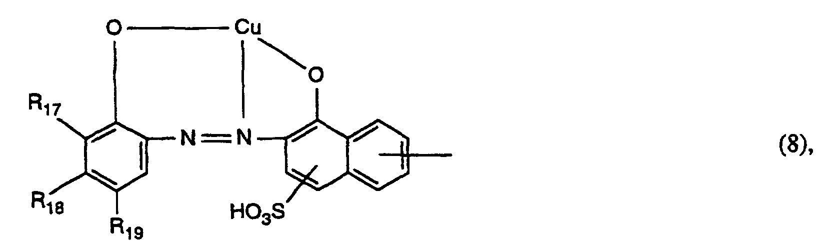 worin R₁₇, R₁₈ und R₁₉ die oben für R₁₃, R₁₄, R₁₅ und R₁₆ angegebenen Bedeutungen haben; 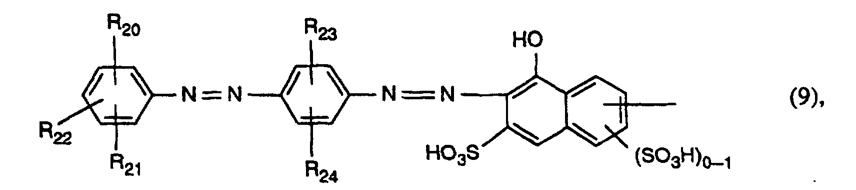 worin R₂₀, R₂₁, R₂₂, R₂₃ und R₂₄ die oben für R₁₃, R₁₄, R₁₅ und R₁₆ angegebenen Bedeutungen haben; 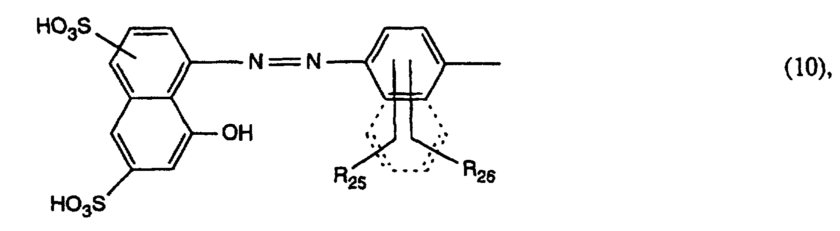 worin R₂₅ und R₂₆ die oben für R₁₃, R₁₄, R₁₅ und R₁₆ angegebenen Bedeutungen haben; 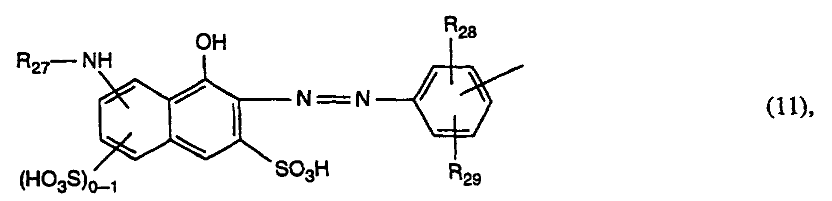 worin R₂₇ Wasserstoff, gegebenenfalls durch Hydroxy oder C₁-C₄-Alkoxy substituiertes C₂-C₆-Alkanoyl, oder gegebenenfalls im Phenylring durch C₁-C₄-Alkyl, C₁-C₄-Alkoxy, C₂-C₄-Alkanoylamino, Sulfo, Carboxy, Halogen, Cyano oder Ureido substituiertes Phenyl oder Benzoyl ist, und R₂₈ und R₂₉ die oben für R₁₃, R₁₄, R₁₅ und R₁₆ angegebenen Bedeutungen haben; 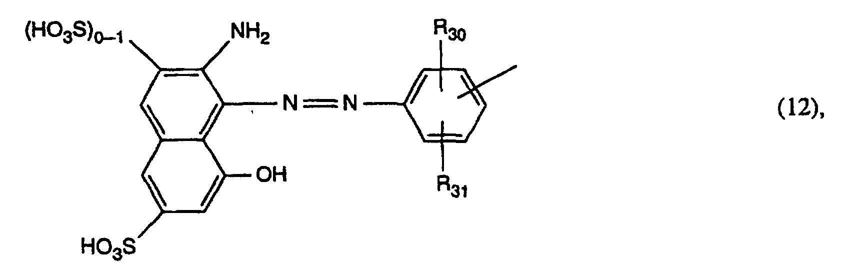 worin R₃₀ und R₃₁ die oben für R₁₃, R₁₄, R₁₅ und R₁₆ angegebenen Bedeutungen haben; 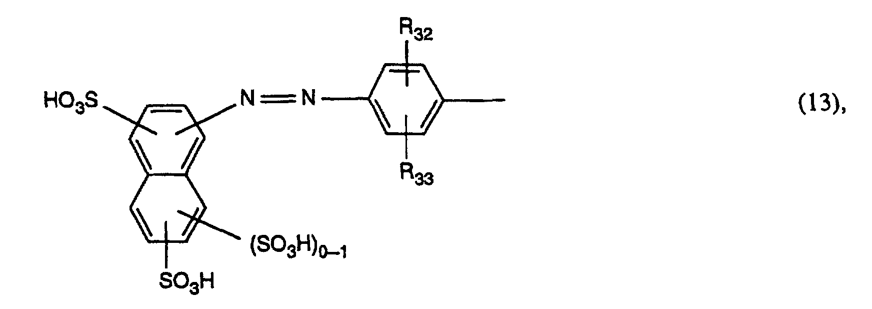 worin R₃₂ und R₃₃ die oben für R₁₃, R₁₄, R₁₅ und R₁₆ angegebenen Bedeutungen haben; 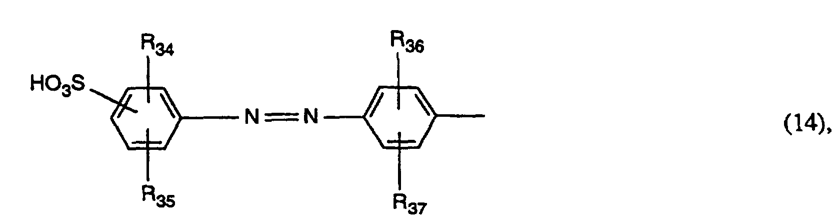 worin R₃₄, R₃₅, R₃₆ und R₃₇ die oben für R₁₃, R₁₄, R₁₅ und R₁₆ angegebenen Bedeutungen haben; oder 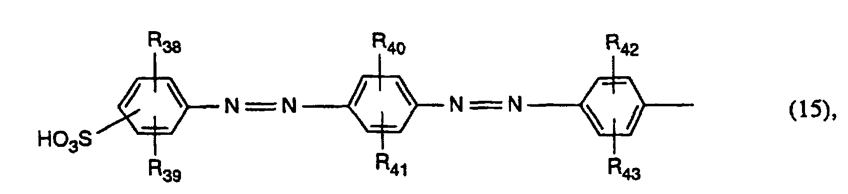 worin R₃₈, R₃₉, R₄₀, R₄₁, R₄₂ und R₄₃ die oben für R₁₃, R₁₄, R₁₅ und R₁₆ angegebenen Bedeutungen haben
n die Zahl 0 oder 1 ist, und
Y₁ und Y₂ unabhängig voneinander einen Rest der Formel 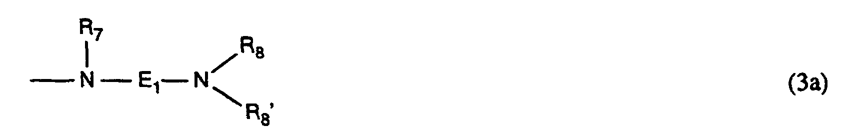 oder 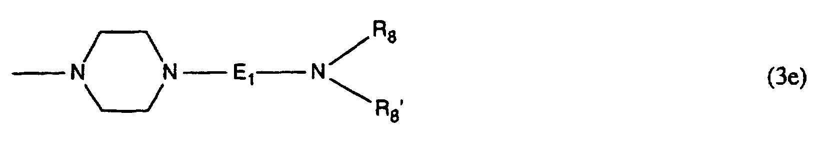 bedeuten, wobei
R₇ Wasserstoff oder ein unsubstituiertes oder durch Hydroxy, C₁-C₄-Alkoxy, Halogen, Amino oder Sulfato substituiertes C₁-C₈-Alkyl ist,
R₈ und R₈' Wasserstoff sind und
E₁ gegebenenfalls substituiertes und gegebenenfalls durch eine oder mehrere Gruppen -O-unterbrochenes C₂-C₈-Alkylen oder gegebenenfalls substituiertes C₅-C₇-Cycloalkylen, C₅-C₇-Cycloalkylen-C₁-C₈-Alkylen oder C₁-C₈-Alkylen-C₅-C₇-Cycloalkylen ist.

Als C₁-C₄-Alkyl kommen für R₁ und R₂ z.B. Methyl, Äthyl, Propyl, Isopropyl, Butyl, sek.-Butyl, tert.-Butyl oder Isobutyl, insbesondere Methyl oder Aethyl, vorzugsweise Methyl, in Betracht.

Bevorzugt sind R₁ und R₂ Wasserstoff, Methyl oder Aethyl, insbesondere Wasserstoff.

Als C₁-C₈-Alkyl kommen für R₇ z.B. Methyl, Äthyl, Propyl, Isopropyl, Butyl, sek.-Butyl, tert.-Butyl, Isobutyl, oder geradkettiges oder verzweigtes Pentyl, Hexyl, Heptyl oder Octyl in Betracht. Der Rest R₇ in der Bedeutung als C₁-C₈-Alkyl kann z.B. durch Hydroxy, C₁-C₄-Alkoxy, Halogen, Amino oder Sulfato, insbesondere durch Hydroxy, C₁-C₄-Alkoxy oder Amino, weitersubstituiert sein.

Bevorzugt ist R₇ Wasserstoff oder gegebenenfalls durch Hydroxy, C₁-C₄-Alkoxy oder Amino substituiertes C₁-C₄-Alkyl.

Der Rest E₁ in der Bedeutung als C₂-C₈-Alkylen kann durch eine oder mehrere Gruppen -O-, insbesondere durch eine bis drei und vorzugsweise durch eine oder zwei Gruppen -O-, unterbrochen sein. Bevorzugt sind die nicht durch eine Gruppe -O- unterbrochenen Reste. Als mögliche Substituenten für den Rest E₁ in der Bedeutung als C₂-C₈-Alkylen seien beispielsweise Hydroxy, C₁-C₄-Alkoxy, Halogen, Amino oder Sulfato, insbesondere Hydroxy oder C₁-C₄-Alkoxy, genannt. Als Beispiele für solche C₂-C₈-Alkylenreste seien 1,2-Aethylen, 1,2-Propylen, 1,3-Propylen sowie in 2-Stellung durch Hydroxy substituiertes 1,3-Propylen genannt.

Der Rest E₁ in der Bedeutung als C₅-C₇-Cycloalkylen,
C₅-C₇-Cycloalkylen-C₁-C₈-Alkylen oder C₁-C₈-Alkylen-C₅-C₇-Cycloalkylen kann im Alkylenrest z.B. durch Hydroxy oder C₁-C₄-Alkoxy und im Cycloalkylring z.B. durch C₁-C₄-Alkyl, insbesondere durch Methyl, substituiert sein. Unter Cycloalkyl wird hierbei insbesondere Cyclohexyl verstanden. Als C₅-C₇-Cycloalkylen-C₁-C₈-Alkylen und C₁-C₈-Alkylen-C₅-C₇-Cycloalkylen kommen insbesondere Cyclohexylen-methylen und Methylen-cyclohexylen in Betracht, welche im Cyclohexylring durch C₁-C₄-Alkyl substituiert sein können.

Bevorzugt handelt es sich bei dem Rest E₁ um C₂-C₈-Alkylen, für welches die oben angegebenen Bedeutungen und Bevorzugungen gelten.

Die Reste Y₁ und Y₂ haben bevorzugt identische Bedeutungen.

R₉, R₁₀ und R₁₁ sind vorzugsweise Wasserstoff, Methyl oder Aethyl, insbesondere Wasserstoff.

R₁₂ und R₁₂' sind vorzugsweise Wasserstoff oder Sulfo. In dem Brückenglied der Formel (5h) bedeuten R₁₂ und R₁₂' bevorzugt Sulfo.

Die Reste E₂ und E₃ in der Bedeutung als C₂-C₈-Alkylen können durch eine oder mehrere Gruppen -O-, insbesondere durch eine bis drei und vorzugsweise durch eine oder zwei Gruppen -O-, unterbrochen sein. Bevorzugt sind die nicht durch eine Gruppe -O-unterbrochenen Reste. Als mögliche Substituenten für den die Reste E₂ und E₃ in der Bedeutung als C₂-C₈-Alkylen seien beispielsweise Hydroxy, C₁-C₄-Alkoxy, Halogen, Amino oder Sulfato, insbesondere Hydroxy oder C₁-C₄-Alkoxy, genannt. Als Beispiele für solche C₂-C₈-Alkylenreste seien 1,2-Aethylen, 1,2-Propylen, 1,3-Propylen, in 2-Stellung durch Hydroxy substituiertes 1,3-Propylen sowie der Rest der Formel -(CH₂)₃-O-(CH₂)₄-O-(CH₂)₃- genannt.

Die Reste E₂ und E₃ in der Bedeutung als C₅-C₇-Cycloalkylen,
C₅-C₇-Cycloalkylen-C₁-C₈-Alkylen oder C₁-C₈-Alkylen-C₅-C₇-Cycloalkylen können im Alkylenrest z.B. durch Hydroxy oder C₁-C₄-Alkoxy und im Cycloalkylring z.B. durch C₁-C₄-Alkyl, insbesondere durch Methyl, substituiert sein. Unter Cycloalkyl wird hierbei insbesondere Cyclohexyl verstanden. Als C₅-C₇-Cycloalkylen-C₁-C₈-Alkylen und C₁-C₈-Alkylen-C₅-C₇-Cycloalkylen kommen insbesondere Cyclohexylen-methylen und Methylen-cyclohexylen in Betracht, welche im Cyclohexylring durch C₁-C₄-Alkyl substituiert sein können.

Bevorzugt handelt es sich bei den Resten E₂ und E₃ um C₂-C₈-Alkylen, für welches die oben angegebenen Bedeutungen und Bevorzugungen gelten.

Als Brückenglied B₁ist ein der Formeln (5a), (5b), (5c) und (5h), insbesondere die der Formeln (5a), (5b) und (5c), besonders bevorzugt.

Als Reste der Formel (7) sind solche bevorzugt, worin R₁₃, R₁₄, R₁₅ und R₁₆ unabhängig voneinander Wasserstoff, Sulfo, Carboxy, C₁-C₄-Alkyl oder C₁-C₄-Alkoxy bedeuten.

Als Reste der Formel (8) sind solche bevorzugt, worin R₁₇, R₁₈ und R₁₉ Wasserstoff oder Sulfo bedeuten, wobei vorzugsweise mindestens einer dieser Substituenten Sulfo ist.

Als Reste der Formel (9) sind solche bevorzugt, worin R₂₀, R₂₁, R₂₂, R₂₃ und R₂₄ Wasserstoff oder Sulfo bedeuten, wobei vorzugsweise mindestens einer dieser Substituenten Sulfo ist.

Als Reste der Formel (10) sind solche bevorzugt, worin R₂₅ und R₂₆ Wasserstoff, Sulfo oder unsubstituiertes oder durch Hydroxy substituiertes C₁-C₄-Alkyl oder C₁-C₄-Alkoxy bedeuten.

Als Reste der Formel (11) sind solche bevorzugt, worin R₂₇ gegebenenfalls im Phenylring durch C₁-C₄-Alkyl, C₁-C₄-Alkoxy, C₂-C₄-Alkanoylamino, Sulfo, Carboxy, Halogen, Cyano oder Ureido substituiertes Benzoyl ist, und R₂₈ und R₂₉ Wasserstoff oder Sulfo bedeuten.

Als Reste der Formel (12) sind solche bevorzugt, worin R₃₀ und R₃₁ Wasserstoff oder Sulfo bedeuten.

Als Reste der Formel (13) sind solche bevorzugt, worin R₃₂ und R₃₃ Wasserstoff, Sulfo, C₁-C₄-Alkyl oder C₁-C₄-Alkoxy bedeuten.

Als Reste der Formel (14) sind solche bevorzugt, worin R₃₄, R₃₅, R₃₆ und R₃₇ Wasserstoff, C₁-C₄-Alkyl, C₁-C₄-Alkoxy oder C₂-C₄-Alkanoylamino bedeuten.

Als Reste der Formel (15) sind solche bevorzugt, worin R₃₈, R₃₉, R₄₀, R₄₁, R₄₂ und R₄₃ Wasserstoff, C₁-C₄-Alkyl, C₁-C₄-Alkoxy oder C₂-C₄-Alkanoylamino bedeuten. Vorzugsweise bedeutet hierbei einer der Reste R₄₀ und R₄₁ Sulfo.

Besonders bevorzugt als Reste A₁ und A₂ sind solche der Formeln (6), (7), (8), (9), (10), (11), (12) und (14), vorzugsweise Reste der Formeln (6), (7), (9), (11), (12) und (14), insbesondere der Rest der Formel (6) oder (7).

In den Farbstoffen der Formel (1) haben die Reste A₁ und A₂ bevorzugt identische Bedeutungen.

Bevorzugt is n die Zahl 0.

Bevorzugt sind Farbstoffe der Formel (1), worin R₁ und R₂ Wasserstoff oder C₁-C₄-Alkyl, insbesondere Wasserstoff, sind, B₁ ein Brückenglied der Formeln (5a) bis (5h) ist, A₁ und A₂ Reste der Formeln (6) bis (15), insbesondere solche der Formeln (6), (7), (8), (9), (10), (11), (12) und (14), vorzugsweise solche der Formeln (6), (7), (9), (11), (12) und (14) sind, R₇ Wasserstoff oder gegebenenfalls durch Hydroxy oder C₁-C₄-Alkoxy substituiertes C₁-C₄-Alkyl ist und E₁ gegebenenfalls durch Hydroxy oder C₁-C₄-Alkoxy substituiertes C₂-C₈-Alkylen ist. Für die Reste A₁ und A₂ sind hierbei solche der Formel (6) oder (7) von besonderem Interesse. Vorzugsweise haben A₁ und A₂ identische Bedeutungen. n ist insbesondere die Zahl 0.

Besonders bevorzugt als Farbstoffe der Formel (1), worin n die Zahl 0 ist, sind solche, worin R₁ und R₂ Wasserstoff sind, A₁ und A₂ Reste der Formeln (7), (8), (9), (10), (11), (12) und (14), vorzugsweise solche der Formeln (7), (9), (11), (12) und (14) und insbesondere solche der Formel (7) sind, R₇ Wasserstoff oder gegebenenfalls durch Hydroxy oder C₁-C₄-Alkoxy substituiertes C₁-C₄-Alkyl ist und E₁ gegebenenfalls durch Hydroxy oder C₁-C₄-Alkoxy substituiertes C₂-C₈-Alkylen ist, wobei die Reste A₁ und A₂ identische Bedeutungen haben.

Ganz besonders bevorzugt als Farbstoffe der Formel (1), worin n die Zahl 0 ist, sind solche, worin A₁ und A₂ Reste der Formel (7), insbesondere Reste der Formel 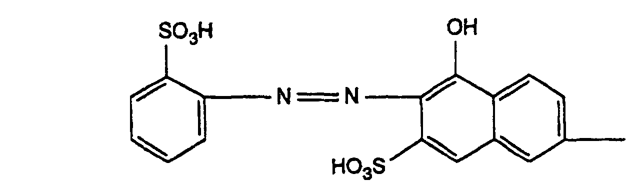 sind. Hierbei gelten für R₁, R₂ und Y₁ die oben genannten Bedeutungen und Bevorzugungen. Vorzugsweise sind hierbei R₁ und R₂ Wasserstoff. Y₁ ist hierbei vorzugsweise ein Rest der Formel (3a), worin R₇ insbesondere Wasserstoff und E₁ insbesondere gegebenenfalls durch Hydroxy oder C₁-C₄-Alkoxy substituiertes C₂-C₈-Alkylen ist. Bevorzugt ist E₁ hierbei C₂-C₈-Alkylen, insbesondere Propylen.

Ganz besonders bevorzugt als Farbstoffe der Formel (1), worin n die Zahl 1 ist, sind solche, worin A₁ und A₂ Reste der Formel (6), insbesondere Reste der Formel 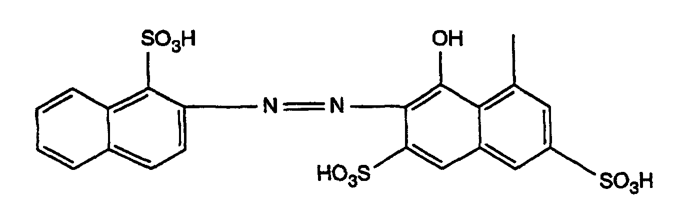 sind. Hierbei gelten für R₁, R₂, B₁, Y₁ und Y₂ die oben genannten Bedeutungen und Bevorzugungen. Vorzugsweise sind hierbei R₁ und R₂ Wasserstoff. Y₁ und Y₂ sind hierbei vorzugsweise Reste der Formel (3e), worin R₈ und R₈' Wasserstoff und E₁ insbesondere gegebenenfalls durch Hydroxy oder C₁-C₄-Alkoxy substituiertes C₂-C₈-Alkylen ist. Bevorzugt ist E₁ hierbei C₂-C₈-Alkylen, insbesondere Äthylen. B₁ ist hierbei vorzugsweise ein Rest der Formel (5d), wobei R₉, R₁₀ und R₁₂ insbesondere Wasserstoff bedeuten. Die Aminogruppen des Restes der Formel (5d) stehen bevorzugt in para-Stellung zueinander.

Eine weitere Gruppe von interessanten Farbstoffen der Formel (1) bilden die Farbstoffe der Formel (1a), wobei für R₁, R₂, X₁, A₁ und A₂ die unter Formel (1a) angegebenen Bedeutungen und Bevorzugungen gelten.

Einen weiteren Gegenstand der vorliegenden Erfindung stellen Verfahren zur Herstellung der Farbstoffe der Formel (1) dar.

Das Verfahren zur Herstellung von anionischen Säurefarbstoffen der Formel (1), worin n die Zahl 0 ist, ist dadurch gekennzeichnet, dass man eine Verbindung der Formel 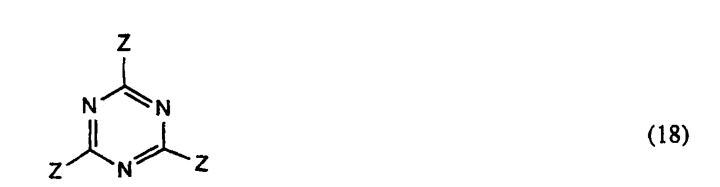 mit einer Verbindung der Formel

A₁-NHR₁ (19a),

einer Verbindung der Formel

A₂-NHR₂ (19b)

und einer Verbindung der Formel

Y₁-H (20a)

umsetzt, worin A₁, A₂, R₁, R₂ und Y₁ jeweils die unter Formel (1) angegebenen Bedeutungen haben und Z Halogen, vorzugsweise Chlor, bedeutet.

Vorzugsweise setzt man die Trihalogenotriazinverbindung der Formel (18) zunächst mit in etwa stöchiometrischen Mengen einer Aminoazoverbindung der Formel (19a) bei einer Temperatur von -5 bis 20°C, vorzugsweise 0 bis 5°C um, wobei der pH-Wert durch Zugabe geeigneter Basen, z.B. Alkalimetallbasen wie Lithium-, Natrium- oder Kaliumhydroxid oder -carbonat, neutral bis sauer, vorzugsweise bei 2 bis 7, insbesondere 2 bis 4, gehalten wird. Zu dem erhaltenen Reaktionsgemisch werden zweckmässigerweise in etwa stöchiometrische Mengen einer Aminoazoverbindung der Formel (19b) gegeben und diese bei leicht erhöhter Temperatur, vorzugsweise bei 30 bis 60°C und einem neutralen bis leicht sauren pH-Wert, der vorzugsweise 6 bis 7 beträgt, mit dem Triazinderivat zur Reaktion gebracht. Handelt es sich bei den Verbindungen der Formeln (19a) und (19b) um identische Aminoazoverbindungen, so setzt man ca. 2 Aequivalente dieses Aminoazofarbstoffes mit 1 Aequivalent Triazinverbindung um, wobei die Temperatur vorzugsweise zunächst bei -5 bis 20°C gehalten und dann auf ca. 30 bis 60°C erhöht wird.

Eine weitere Möglichkeit besteht darin, die Triazinverbindung der Formel (18) mit einem Gemisch enthaltend sowohl eine Verbindung der Formel (19a) als auch eine davon verschiedene Verbindung der Formel (19b) umzusetzen, wobei ein Gemisch erhalten wird, welches eine asymmetrische Verbindung der Formel 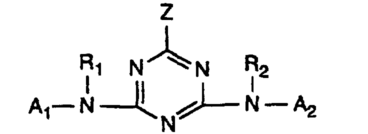 und zwei symmetrischen Verbindungen der Formeln 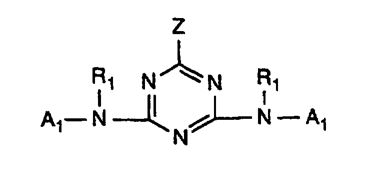 und 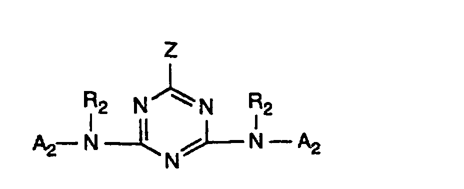 enthält.

Die gemäss den oben beschriebenen Verfahren erhältlichen Triazinylfarbstoffe enthalten noch ein Halogenatom Z, welches durch Reaktion mit einer Verbindung der Formel (20a) bei erhöhter Temperatur, vorzugsweise 70 bis 100°C, und einem neutralen bis leicht alkalischen pH-Wert, der je nach eingesetzter Verbindung der Formel (20a) z.B. 7 bis 9 beträgt, in eine Gruppe Y₁ umgewandelt werden kann.

Die Verbindungen der zuvor angegebenen Formel (1), worin n die Zahl 1 bedeutet, werden hergestellt, z.B. indem man
a) unabhängig voneinander eine Verbindung der Formel 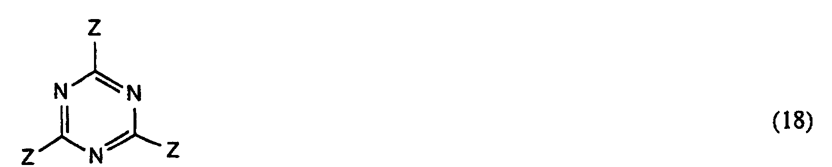 mit einer Verbindung der Formel

   A₁-NHR₁ (19a)

   zur Verbindung der Formel 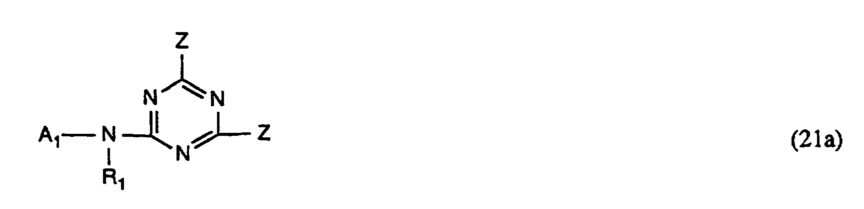 umsetzt und eine weitere Verbindung der Formel (18) mit einer Verbindung der Formel

   A₂-NHR₂ (19b)

   zur Verbindung der Formel 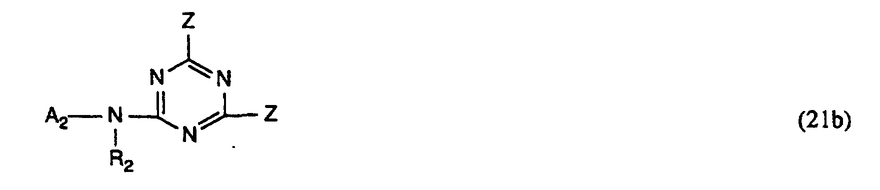 umsetzt,
b) eine Verbindung der Formel

   H-B₁-H (22a)

   nacheinander in beliebiger Reihenfolge mit den gemäss a) erhältlichen Verbindungen der Formel (21a) und (21b) umsetzt und
c) die gemäss b) erhältliche Verbindung der Formel 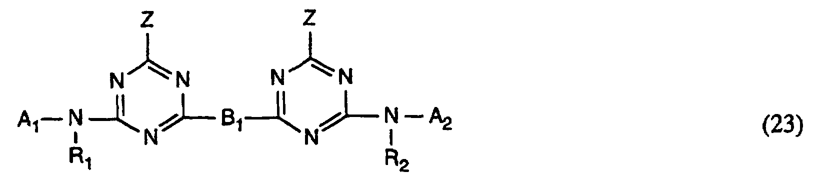 mit mindestens einer der Verbindungen der Formeln

   Y₁-H (20a) und Y₂-H (20b)

   umsetzt, worin A₁, A₂, R₁, R₂, Y₁, Y₂ und B₁ jeweils die unter Formel (1) angegebenen Bedeutungen haben und Z Halogen, vorzugsweise Chlor, bedeutet.

Die Umsetzung der Verbindung der Formel (18) mit der Verbindung der Formel (19a) bzw. (19b) gemäss Schritt a) erfolgt hierbei vorteilhaft wie zuvor beschrieben.

Die Reaktion der Verbindung der Formel (22a) mit den gemäss a) erhaltenen Verbindungen der Formel (21a) und (21b) wird vorzugsweise bei leicht erhöhter Temperatur, vorteilhaft z.B. bei 30 bis 50°C, und einem neutralen bis leicht sauren pH, der z.B. 6 bis 7 beträgt, durchgeführt, wobei man zweckmässig in etwa stöchiometrische Mengen der Verbindungen (21a), (21b) und (22a) einsetzt. Handelt es sich bei den Verbindungen der Formel (19a) und (19b) um identische Aminoazoverbindungen, so stellt man vorteilhaft zunächst 2 Mol-Aequivalente der Verbindung der Formel (21a) her und setzt diese mit ca. 1 Mol-Aequivalent Verbindung der Formel (22a) um. Die gemäss b) erhältlichen Verbindungen der Formel (23) enthalten noch 2 Halogenatome Z, die vorteilhaft wie zuvor beschrieben in eine Gruppe Y₁ bzw. Y₂ umgewandelt werden können.

Die anionischen Säurefarbstoffe der Formel (1) liegen entweder in der Form ihrer freien Säure oder vorzugsweise als deren Salze vor.

Als Salze kommen beispielsweise die Alkali-, Erdalkali- oder Ammoniumsalze oder die Salze eines organischen Amins in Betracht. Als Beispiele seien die Natrium-, Lithium-, Kalium- oder Ammoniumsalze oder das Salz des Mono-, Di- oder Triäthanolamins genannt.

Die Bedeutung Sulfo umfasst generell die freie Säureform (-SO₃H) als auch die Salzform.

Bei den Farbstoffen der Formel (1) handelt es sich um anionische Säurefarbstoffe. In diesen ist die Zahl der anionischen Gruppen, insbesondere die Zahl der Sulfogruppen, grösser als die Zahl der kationischen Gruppen. Unter kationischen Gruppen sind solche zu verstehen, welche unter den üblichen Färbebedingungen eine kationische Ladung tragen. Als Beispiele seien aliphatisch gebundene Aminoreste zu genannt. Die im Triazinring vorhandenen sowie die an den Triazinrest gebundenen Stickstoffatome tragen keine kationische Ladung.

Ein weiterer Gegenstand der vorliegenden Erfindung ist die Verwendung der anionischen Säurefarbstoffe der Formel (1) zum Färben oder Bedrucken von stickstoffhaltigen und insbesondere hydroxylgruppenhaltigen Fasermaterialien.

Die erfindungsgemässen anionischen Säurefarbstoffe der Formel (1) eignen sich also zum Färben und Bedrucken von stickstoffhaltigen oder insbesondere von cellulosischen Fasermaterialien, vorzugsweise von textilen Fasermaterialien, aus Seide, Wolle oder synthetischen Polyamiden, sowie bevorzugt aus den cellulosischen Fasern, wie Rayon, Baumwolle oder Hanf. Ferner seien Papier und Leder genannt.

Bezüglich ihrer färberischen Eigenschaften können sie als direktziehende oder Direktfarbstoffe (C.I. direct dyes) bezeichnet werden.

Ebenfalls können textile Fasermaterialien aus Mischfasern, wie z.B. aus Wolle/Baumwoll-, Polyamid/Baumwoll-, Polyacryl/Baumwoll- oder insbesondere Polyester/Baumwoll-Mischfasern durch Einbad-Färbeverfahren und in Gegenwart von Farbstoffen für die jeweils anderen Fasertypen gefärbt werden.

Die textilen Fasermaterialien können in den verschiedensten Verarbeitungszuständen vorliegen, wie z.B. als Faser, Garn, Gewebe oder Gewirke.

Man erhält egale Färbungen mit guten Allgemeinechtheiten, insbesondere guten Reib-, Nass-, Nassreib-, Schweiss- und Lichtechtheiten. Sofern nötig, kann man die Nassechtheiten, insbesondere die Waschechtheit, der erhaltenen Direktfärbungen und -drucke durch eine Nachbehandlung mit sog. Fixiermitteln noch wesentlich verbessern.

Die erfindungsgemässen anionischen Säurefarbstoffe der Formel (1) sind gut mit anderen Farbstoffen, insbesondere Dispersionsfarbstoffen, kombinierbar. Die erfindungsgemässen anionischen Säurefarbstoffe der Formel (1) weisen eine ausreichende Hochtemperatur-Stabilität auf und lassen sich so unter den Färbebedingungen für Polyesterfasern, d.h. bei Temperaturen im Bereich von etwa 100 bis 150°C, vorzugsweise von 110 bis 130°C, aus wässriger Flotte und bei einem pH-Wert von 4 bis 7,5, vorzugsweise 5 bis 7, färben.

Damit ist es möglich, übliche Dispersionsfarbstoffe zusammen mit den erfindungsgemässen erfindungsgemässen anionischen Säurefarbstoffen der Formel (1) in einem einstufigen, einbadigen Verfahren zum Färben von Polyester/Baumwoll-Mischfasern (Mischgewebe) einzusetzen, wobei beide Faserarten gleichmässig und echt durch den jeweiligen Farbstoff angefärbt werden. Verwendet man einen Dispersionsfarbstoff mit gleicher Nuance wie die erfindungsgemässen anionischen Säurefarbstoffe der Formel (1) sie aufweisen, so ist es auch möglich Ton-in-Ton-Färbungen zu erhalten.

Mit der Bereitstellung der erfindungsgemässen anionischen Säurefarbstoffe der Formel (1) kann man das Färben von textilen Mischfasern (Mischgeweben), z.B. solchen aus Polyester- und Cellulosefasern, wesentlich vereinfachen. Die an sich übliche Färbung jeder Faserart einer Fasermischung in einem separaten Arbeitsgang unter Anwendung unterschiedlicher Färbebedingungen ist damit nicht mehr nötig.

Die folgenden Beispiele dienen zur Erläuterung der Erfindung. Teile und Prozente beziehen sich auf das Gewicht, sofern nicht anders angegeben. Gewichtsteile und Volumenteile stehen in gleicher Beziehung zueinander wie Kilogramm und Liter. Die Temperaturen sind in Celsiusgraden angegeben.

### Beispiel 1:

a) In einem Mixer werden 20,3 Teile Cyanurchlorid, 100 Teile Wasser und 100 Teile Eis gemahlen. Die so erhaltene Suspension wird mit 200 Teilen Wasser verdünnt und vorgelegt.
   Dann wird eine Lösung aus 670 Teilen Wasser und 46,4 Teilen einer Verbindung, die in Form der freien Säure der Formel 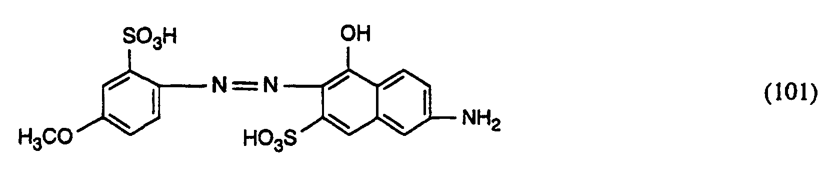 entspricht, bei einer Temperatur von 0 bis 5°C innerhalb von 1,5 Stunden zu der wie oben angegeben erhaltenen Cyanurchloridsuspension getropft. Hierbei wird der pH durch Zugabe einer 2-normalen wässrigen Natriumhydroxidlösung bei einem Wert von 2,5 bis 3 gehalten. Anschliessend lässt man eine Stunde ausreagieren. Die so erhaltene Lösung enthält die in Form der freien Säure angegebene Verbindung der Formel 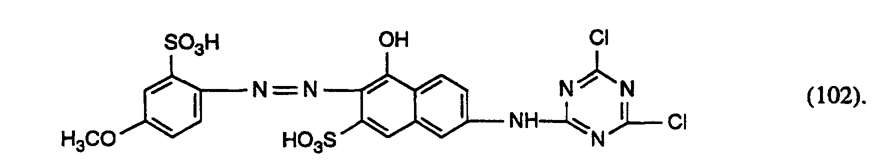
   Die Verbindung der Formel (102) kann durch Aussalzen isoliert werden, oder vorteilhaft direkt als Lösung für eine weitere Kondensation eingesetzt werden.
b) Die wie oben unter a) angegeben erhältliche Lösung der Verbindung der Formel (102) wird mit einer Lösung aus 570 Teilen Wasser und 46,4 Teilen der Verbindung der Formel (101) versetzt und der pH wird auf einen Wert von 6,5 gestellt. Anschliessend wird die Temperatur auf 40 bis 50°C erhöht, wobei der pH durch Zugabe einer 2-normalen wässrigen Natriumhydroxidlösung bei einem Wert von 6,5 gehalten wird. Nach ca. 13 Stunden ist die Kondensation beendet. Die so erhaltene Lösung enthält die in Form der freien Säure angegebene Verbindung der Formel 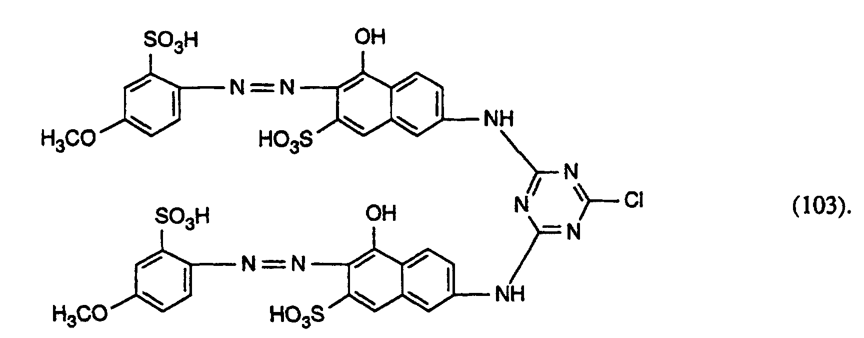
   Die Verbindung der Formel (103) kann durch Aussalzen mittels Natriumchlorid/Kaliumchlorid isoliert werden, oder direkt als Lösung für eine weitere Kondensation eingesetzt werden.
c) 14,71 Teile der Verbindung der Formel (103) mit einem Gehalt von 69,2%, welche zuvor durch Aussalzen von der wie oben unter b) angegeben erhältlichen Lösung abgeschieden wird, werden mit 200 Teilen Wasser versetzt und auf eine Temperatur von 85°C erwärmt.

Dann wird eine Lösung aus 30 Teilen Wasser und 1,53 Teilen 1,3-Diaminopropan, welche durch Zugabe von 2-normaler Salzsäure auf einen pH-Wert von 8,5 gestellt ist, zu der wie oben unter c) hergestellten Lösung der Verbindung der Formel (103) gegeben. Man erhitzt 4 Stunden auf eine Temperatur von 85°C und hält den pH durch Zugabe einer 2-normalen wässrigen Natriumhydroxidlösung bei einem Wert von 8,5. Zur Abscheidung werden 25 Teile Natriumchlorid eingestreut und gleichzeitig wird der pH durch Zugabe von Essigsäure schrittweise auf einen Wert von 7 gestellt. Anschliessend lässt man auf eine Temperatur von 30°C abkühlen und nutscht den ausgefallenen Farbstoff ab. Nach dem Trocknen erhält man einen Farbstoff, der in Form der freien Säure der Verbindung der Formel 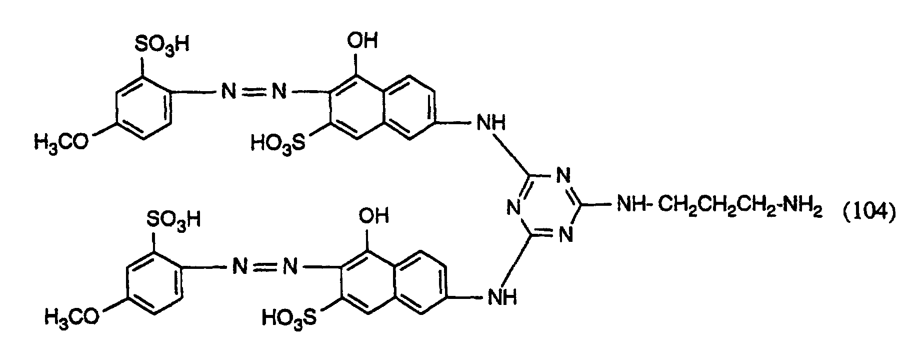 entspricht. Der Farbstoff der Formel (104) färbt Baumwolle in roten Farbtönen.

### Beispiel 2:

a) In einem Mixer werden 27,7 Teile Cyanurchlorid, 100 Teile Wasser und 100 Teile Eis gemahlen. Die so erhaltene Suspension wird vorgelegt.
   Dann wird eine auf einen pH-Wert von 5 gestellte Lösung aus 3000 Teilen Wasser und 91 Teilen einer Verbindung, die in Form der freien Säure der Formel 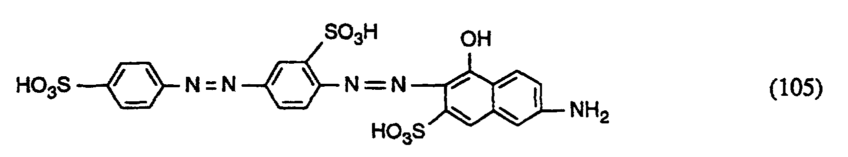 entspricht, bei einer Temperatur von 0 bis 5°C innerhalb von einer Stunde zu der wie oben angegeben erhaltenen Cyanurchloridsuspension getropft. Hierbei wird der pH durch Zugabe einer 2-normalen wässrigen Natriumhydroxidlösung bei einem Wert von 2 gehalten. Dann wird der pH auf einen Wert von 5 gestellt und man lässt ca. 4 Stunden bei dem pH-Wert von 5 und bei Raumtemperatur ausreagieren. Die so erhaltene Lösung enthält die in Form der freien Säure angegebene Verbindung der Formel 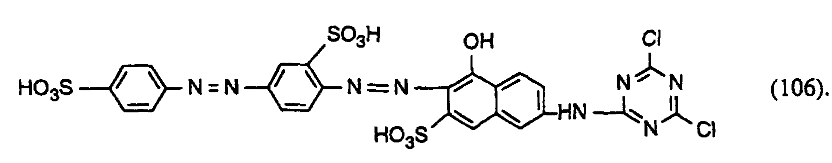
b) Es wird eine Lösung hergestellt, welche 2000 Teile Wasser und 91 Teile der in Form der freien Säure angegebenen Verbindung der Formel 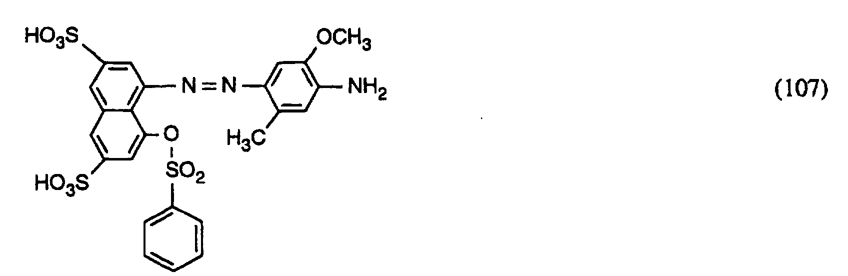 enthält und auf einen pH-Wert von 6 gestellt ist.
   Diese Lösung der Verbindung der Formel (107) wird bei Raumtemperatur innerhalb von einer Stunde zu der wie oben unter a) angegeben erhältlichen Lösung der Verbindung der Formel (106) getropft, wobei der pH durch Zugabe einer 2-normalen wässrigen Natriumcarbonatlösung bei einem Wert von 5,7 gehalten wird. Dann wird die Temperatur auf 52 bis 55°C erhöht und der pH wird weiterhin bei einem Wert von 5,7 gehalten. Man lässt 20 Stunden ausreagieren. Dann wird auf eine Temperatur von 50°C abgekühlt und mit 500 Teilen Natriumchlorid ausgesalzen und zur Vervollständigung der Abscheidung tropfenweise mit 1200 Teilen Aethanol versetzt. Man rührt noch 2 Stunden aus und nutscht das ausgefallene Produkt ab. Nach dem Trocknen erhält man eine Verbindung, die in Form der freien Säure der Formel 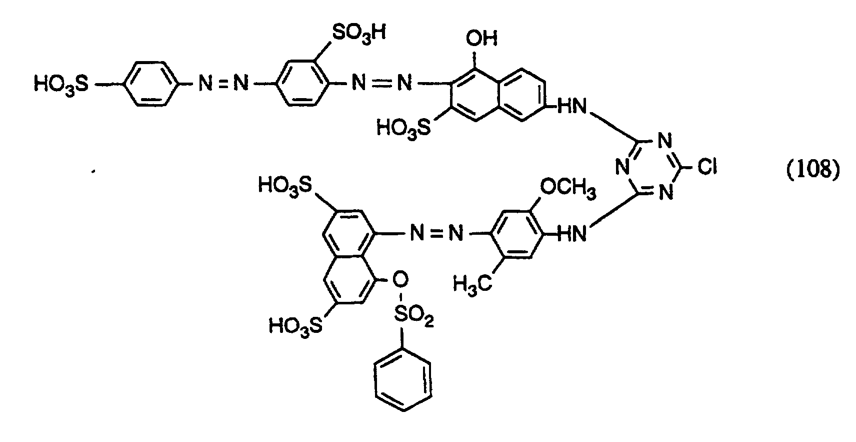 entspricht.
c) 13,13 Teile der wie unter b) angegeben erhältlichen Verbindung der Formel (108) mit einem Gehalt von 75,7% werden mit 180 Teilen Wasser versetzt. Diese Lösung wird auf einen pH-Wert von 6 gestellt und auf eine Temperatur von 85°C erwärmt.
   Dann wird eine Lösung aus 20 Teilen Wasser und 1,46 Teilen 1-(2-Aminoäthyl)-piperazin, welche durch Zugabe von konzentrierter Salzsäure auf einen pH-Wert von 6,5 gestellt ist, zu der wie oben unter c) hergestellten Lösung der Verbindung der Formel (108) gegeben. Man erhitzt 15 Stunden auf eine Temperatur von 85°C und hält den pH durch Zugabe einer 1-normalen wässrigen Natriumhydroxidlösung bei einem Wert von 6,5. Die so erhaltene Reaktionslösung enthält die in Form der freien Säure angegebene Verbindung der Formel 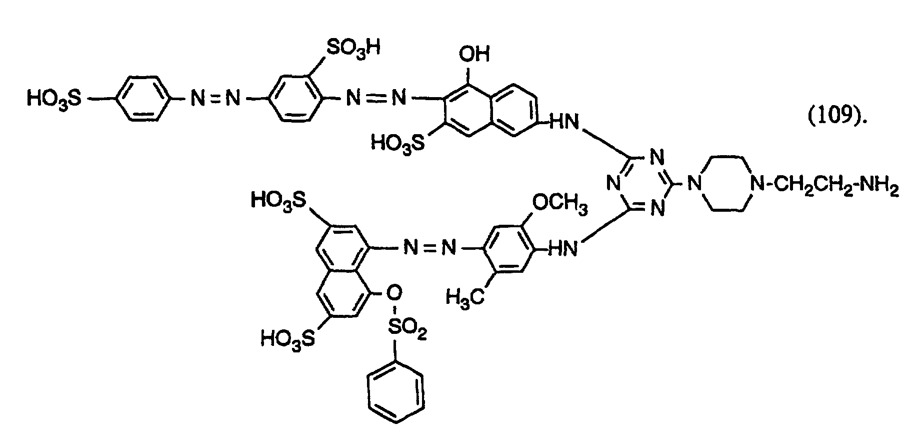
d) Zur Abspaltung des Sulfonsäureesters der Verbindung der Formel (109) werden bei einer Temperatur von 85°C 11 Teile einer wässrigen Natriumhydroxidlösung (30%-ig) zu der wie oben unter c) angegeben erhältlichen Lösung der Verbindung der Formel (109) gegeben, und man lässt ca. 2 bis 3 Stunden reagieren. Dann wird mit einer 2-normalen wässrigen Salzsäurelösung auf einen pH-Wert von 9 gestellt und das ausgefallene Produkt abfiltriert und getrocknet. Man erhält einen Farbstoff, der in Form der freien Säure der Verbindung der Formel 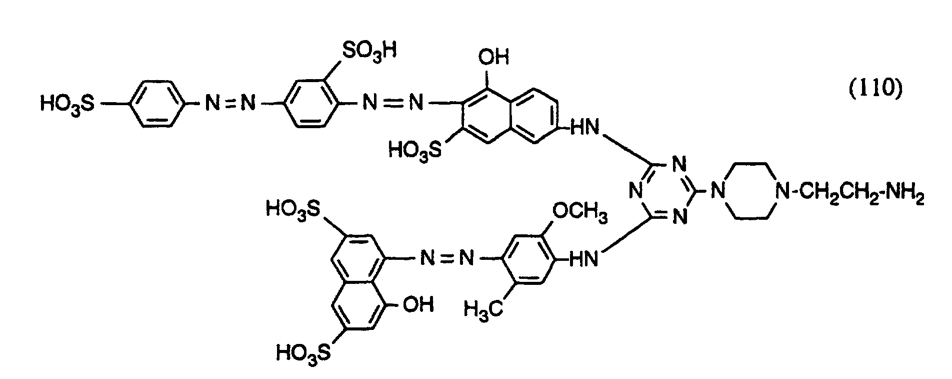 entspricht. Der Farbstoff der Formel (110) färbt Baumwolle in roten Farbtönen.

In den folgenden Tabellen aufgeführte Reste A₁ und A₂ sind mit den Bezeichnungen A bis Z6 gekennzeichnet und haben dort folgende Bedeutungen:

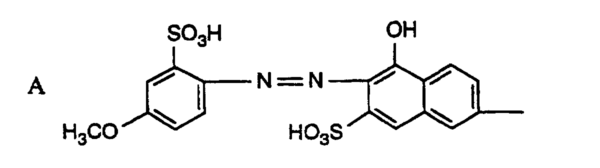

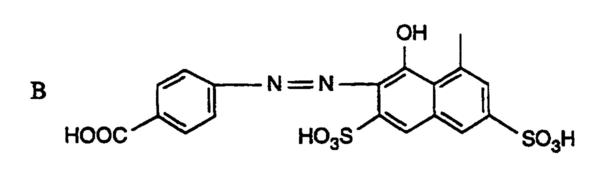

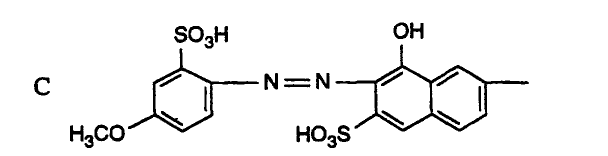

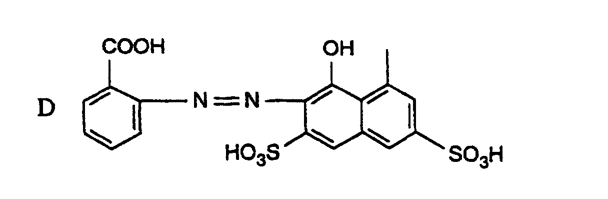

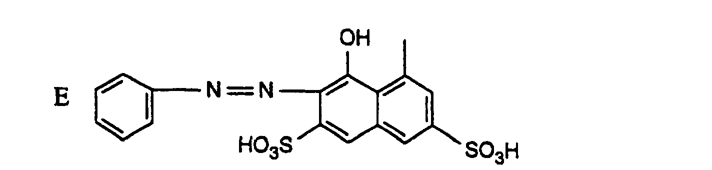

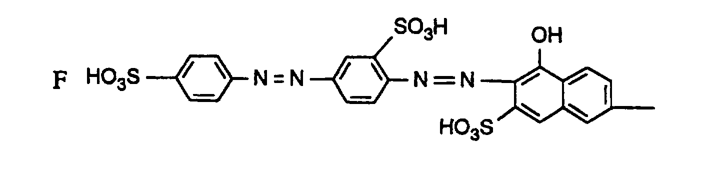

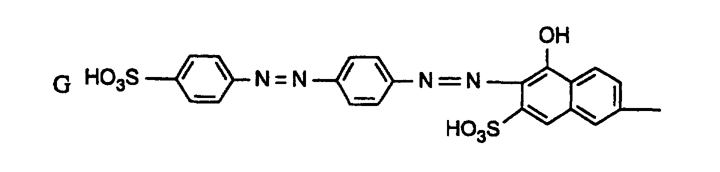

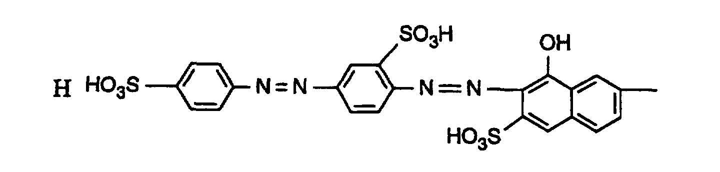

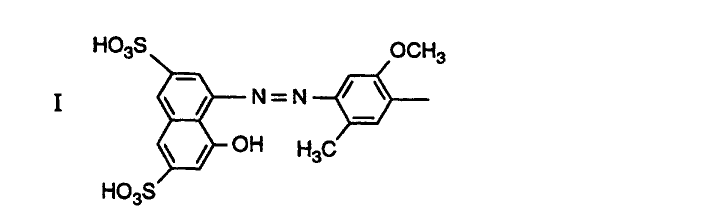

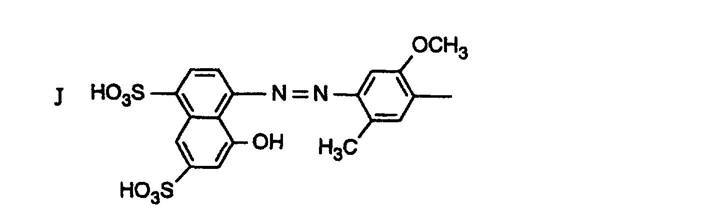

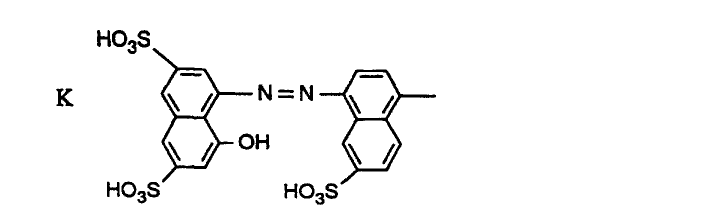

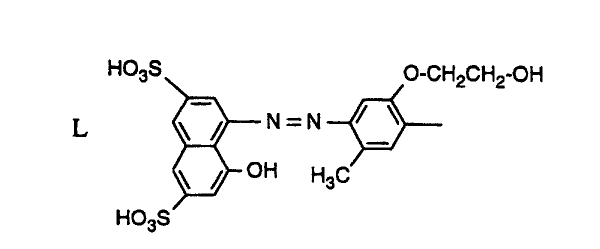

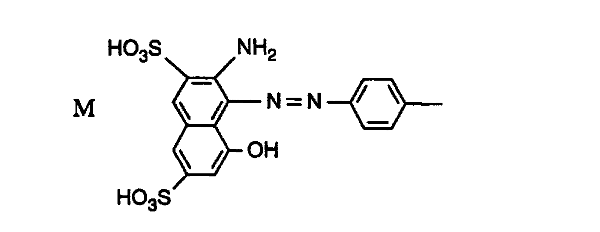

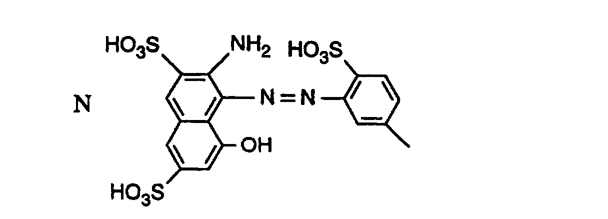

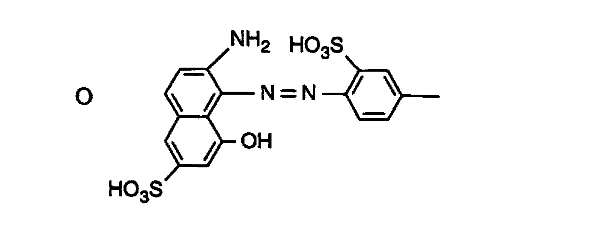

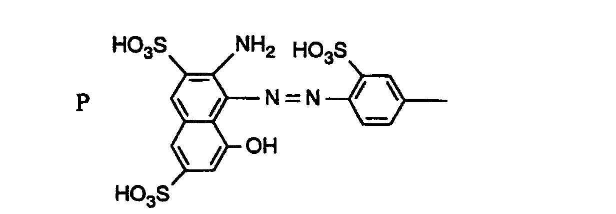

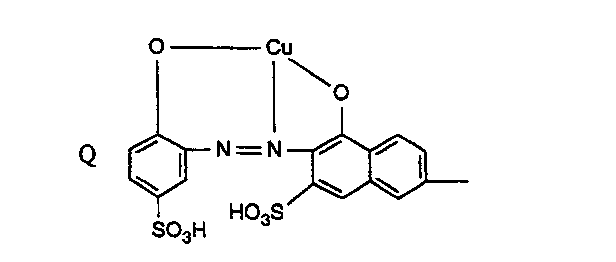

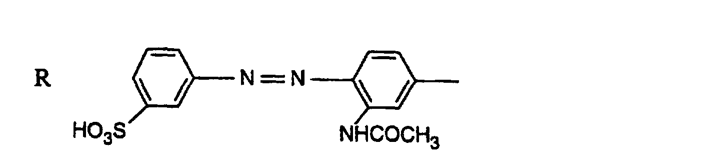

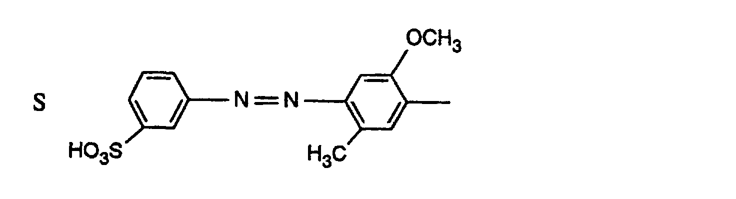

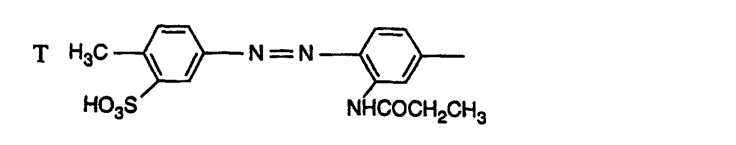

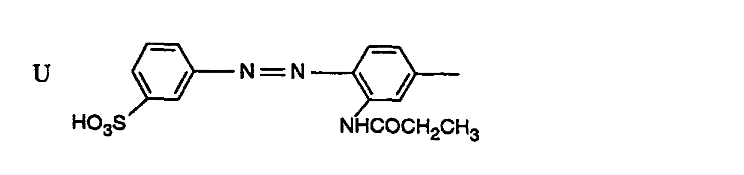

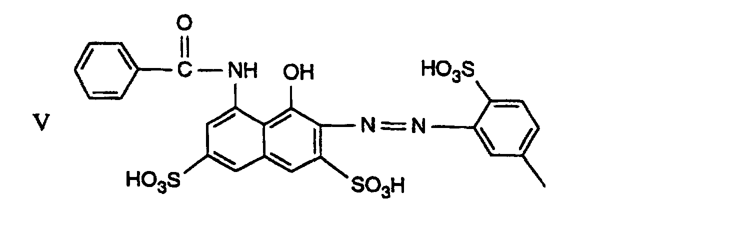

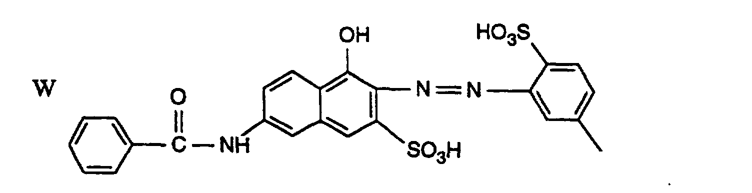

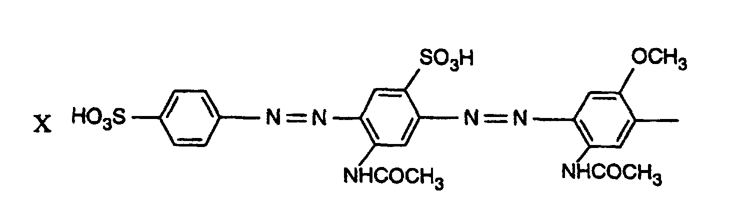

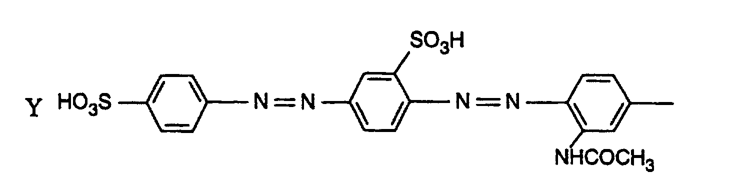

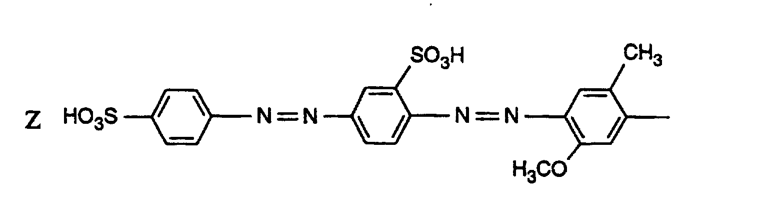

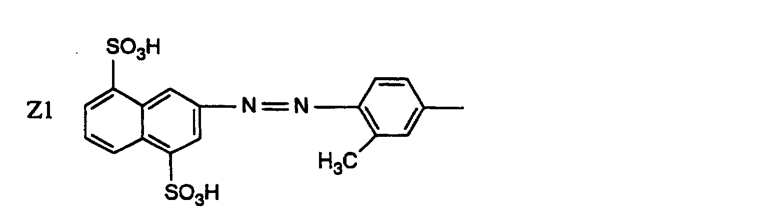

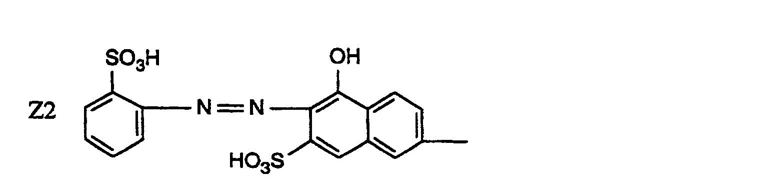

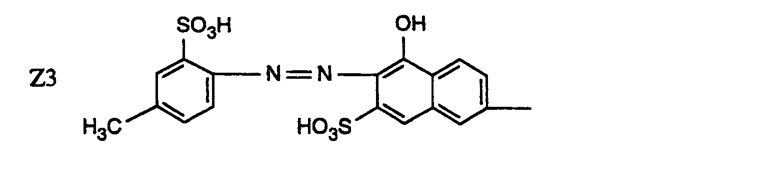

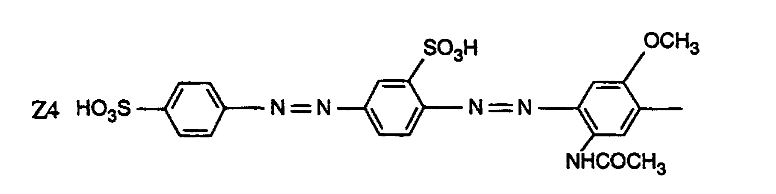

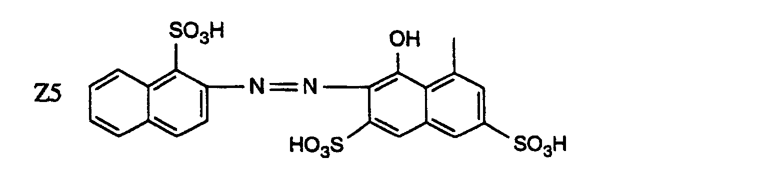

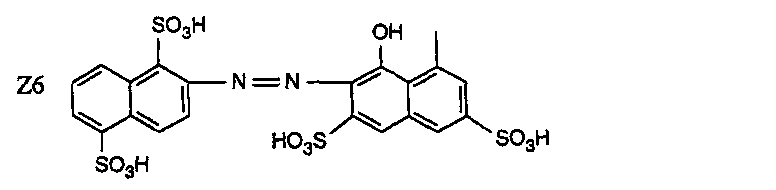

In den folgenden Tabellen aufgeführte Brückenglieder B₁ sind mit den Bezeichnungen a bis 1 gekennzeichnet und haben dort folgende Bedeutungen:

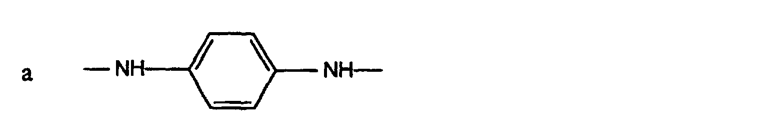

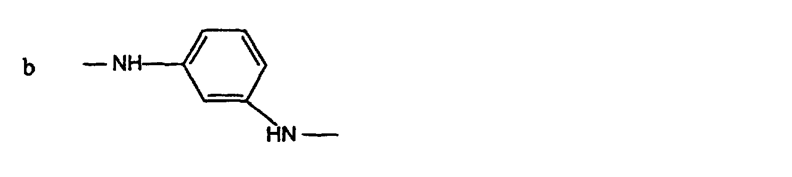

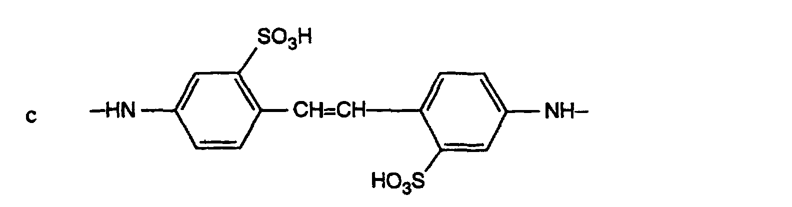

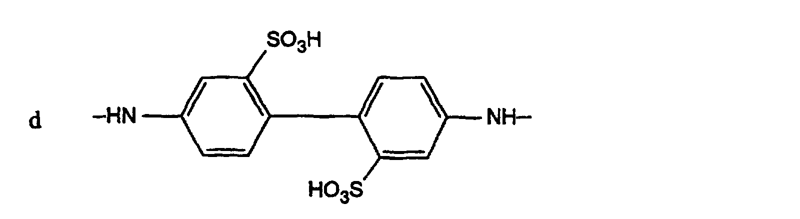

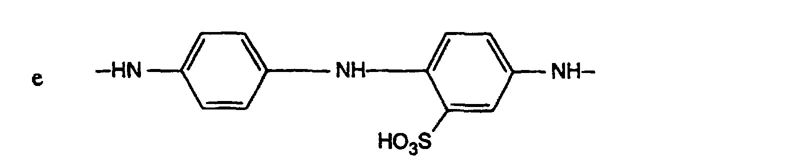

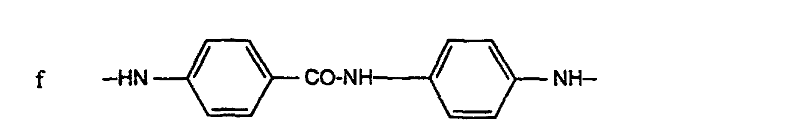

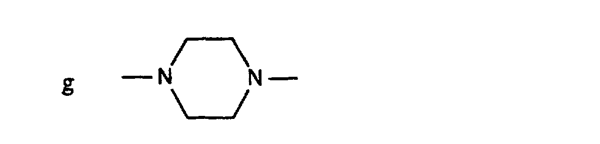

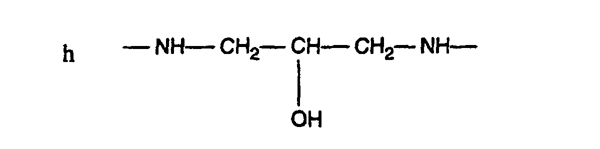

i -NH-CH₂CH₂CH₂-NH-

j -NH-CH₂CH₂-NH-

k -NH-(CH₂)₃-O-(CH₂)₄-O-(CH₂)₃-NH-

Beispiele 3 bis 60: In analoger Weise zu den Beispielen 1 und 2 können Farbstoffe der allgemeinen Formel 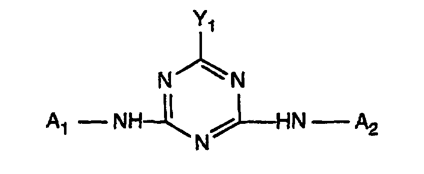 erhalten werden, wobei A₁, A₂ und Y₁ die in der folgenden Tabelle 1 angegebenen Bedeutungen haben. Die in der Tabelle 1 in Form der freien Säure angegebenen Farbstoffe färben Baumwolle in den in Spalte 5 der Tabelle aufgeführten Farbtönen.

Die Bezeichnungen A bis Z6 für die Reste A₁ und A₂ haben die oben angegebenen Bedeutungen.

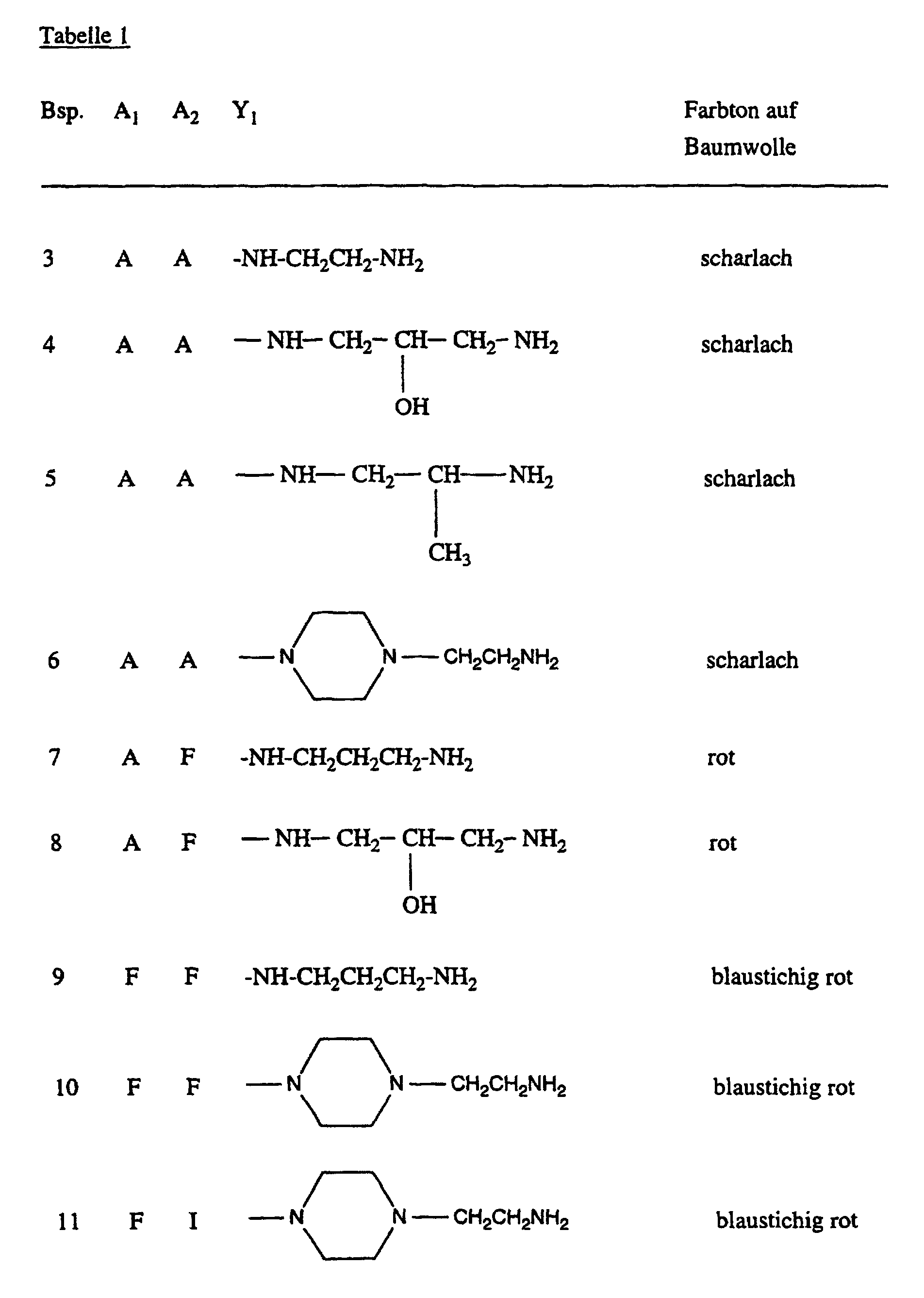

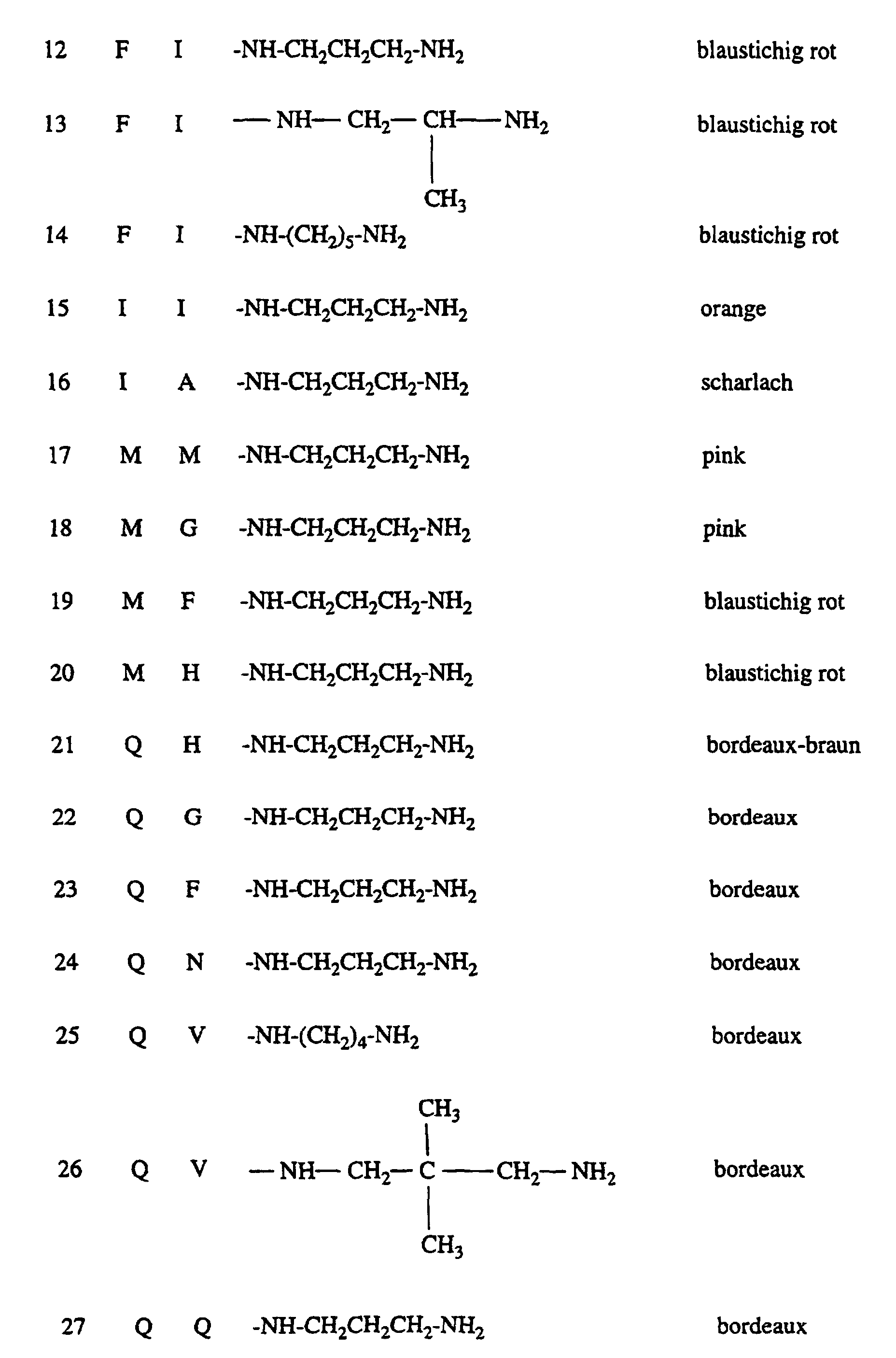

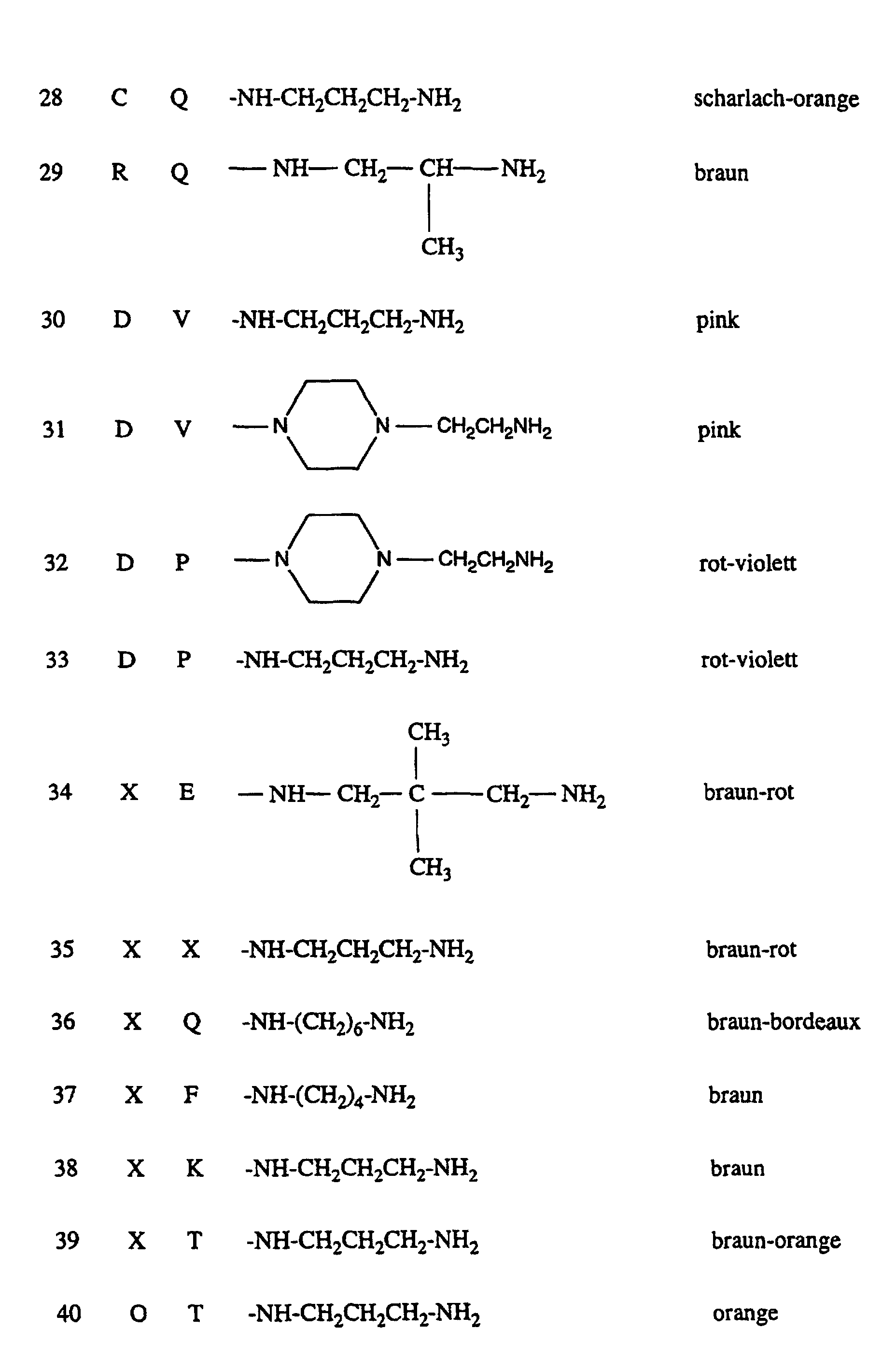

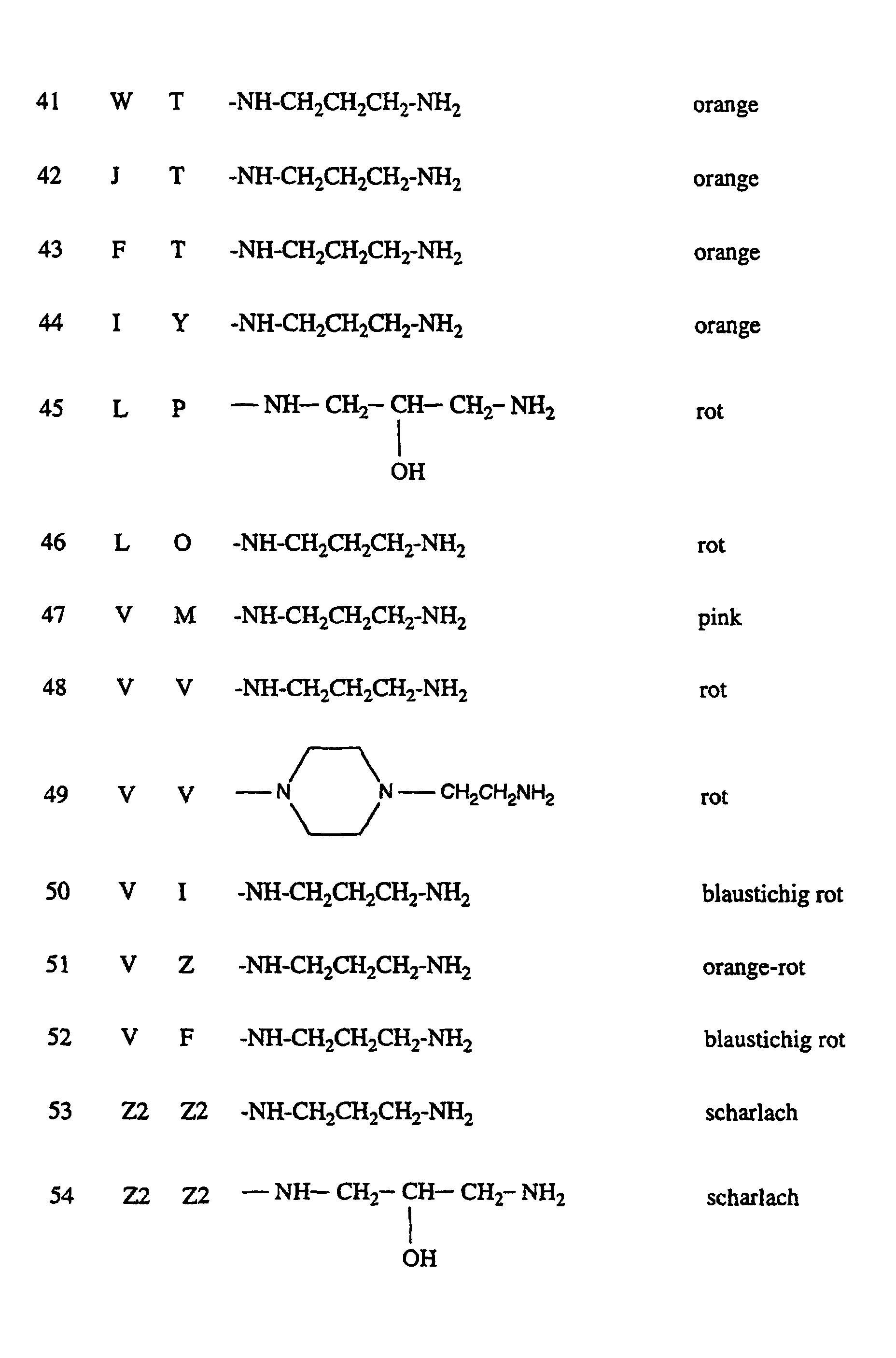

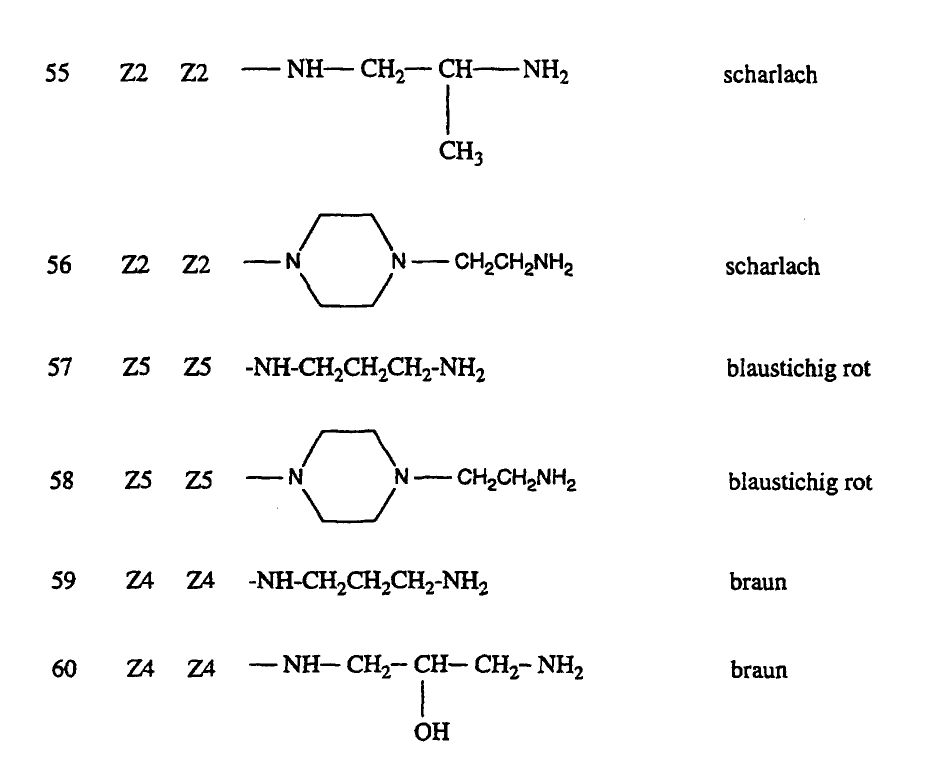

### Beispiel 61:

a) In einem Mixer werden 20,3 Teile Cyanurchlorid, 100 Teile Wasser und 100 Teile Eis gemahlen. Die so erhaltene Suspension wird mit 200 Teilen Wasser verdünnt und vorgelegt.
   Dann wird eine Lösung aus 670 Teilen Wasser und 46,4 Teilen einer Verbindung, die in Form der freien Säure der Formel 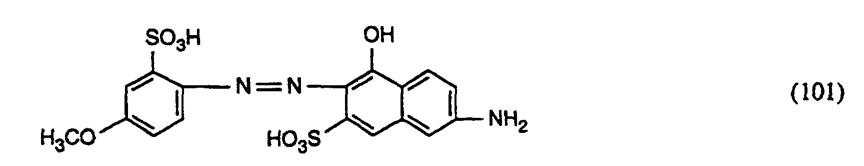 entspricht, bei einer Temperatur von 0 bis 5°C innerhalb von 1,5 Stunden zu der wie oben angegeben erhaltenen Cyanurchloridsuspension getropft. Hierbei wird der pH durch Zugabe einer 2-normalen wässrigen Natriumhydroxidlösung bei einem Wert von 2,5 bis 3 gehalten. Anschliessend lässt man eine Stunde ausreagieren. Die so erhaltene Lösung enthält die in Form der freien Säure angegebene Verbindung der Formel 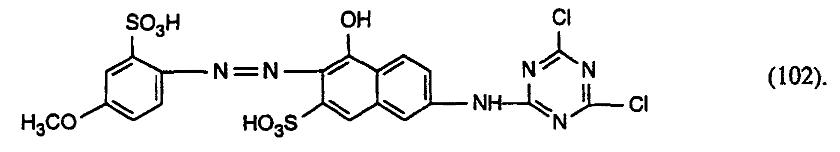 Die Verbindung der Formel (102) kann durch Aussalzen isoliert werden, oder vorteilhaft direkt als Lösung für eine weitere Kondensation eingesetzt werden.
b) Die wie oben unter a) angegeben erhältliche Lösung der Verbindung der Formel (102) wird mit 5,4 Teilen 1,4-Diaminobenzol versetzt und auf eine Temperatur von 40°C erwärmt. Durch Zugabe einer 2-normalen wässrigen Kaliumhydrogencarbonatlösung wird der pH bei einem Wert von 6,5 gehalten und man lässt ca. 18 bis 20 Stunden ausreagieren. Die so erhaltene Lösung enthält die in Form der freien Säure angegebene Verbindung der Formel 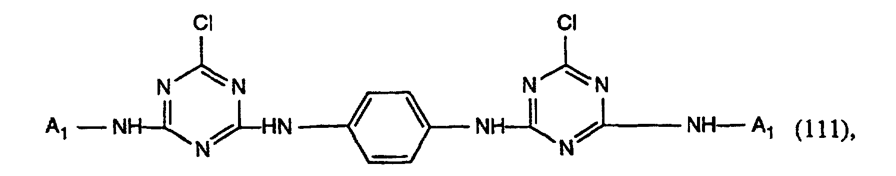 worin A₁ ein Rest der Formel 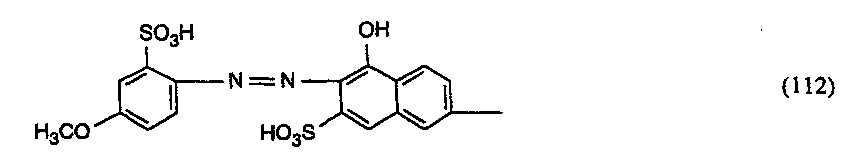 ist. Die Verbindung der Formel (111) kann mittels Natriumchlorid und durch Zugabe von Aethanol abgeschieden werden, oder vorteilhaft direkt als Lösung für eine weitere Kondensation eingesetzt werden.
c) Die wie oben unter b) angegeben erhältliche Lösung der Verbindung der Formel (111) wird mit einer Lösung aus 150 Teilen Wasser und 22,2 Teilen 1,3-Diaminopropan, welche zuvor durch Zugabe einer 2-normalen Salzsäurelösung auf einen pH-Wert von 8,5 gestellt wurde, versetzt und anschliessend auf eine Temperatur von 80°C erhitzt. Hierbei wird der pH konstant bei einem Wert von 8,5 gehalten. Man lässt 20 Stunden ausreagieren, stellt den pH auf einen Wert von 7 und salzt mit einer wässrigen Natriumchloridlösung (10%-ig) aus. Das erhaltene Produkt wird abgenutscht und getrocknet. Man erhält einen Farbstoff, der in Form der freien Säure der Formel 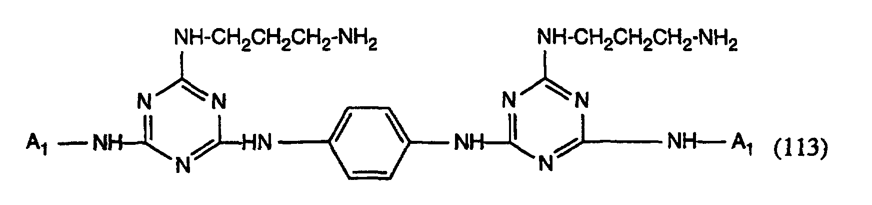 entspricht, wobei A₁ der oben angegebene Rest der Formel (112) ist. Der Farbstoff der Formel (113) färbt Baumwolle in roten Farbtönen.

Beispiele 62 bis 98: In analoger Weise zu Beispiel 61 können Farbstoffe der allgemeinen Formel 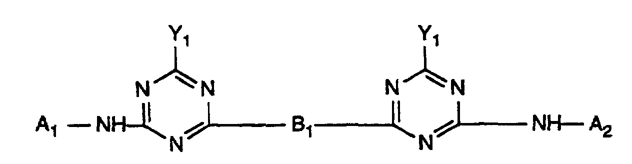 erhalten werden, wobei A₁, A₂, B₁ und Y₁ die in der folgenden Tabelle 2 angegebenen Bedeutungen haben. Die in der Tabelle 2 in Form der freien Säure angegebenen Farbstoffe färben Baumwolle in den in Spalte 6 der Tabelle 2 aufgeführten Farbtönen.

Die Bezeichnungen A bis Z6 für die Reste A₁ und A₂ und die Bezeichnungen a bis h für das Brückenglied B₁ haben die oben angegebenen Bedeutungen.

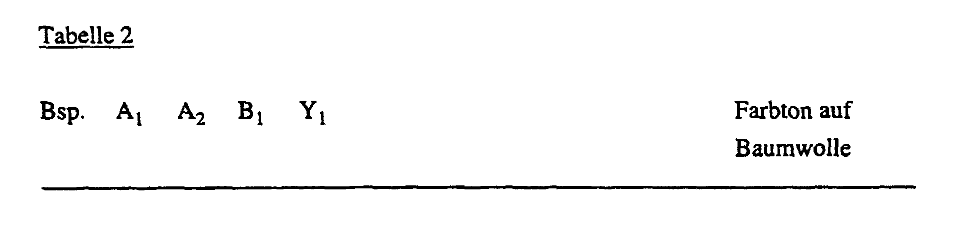

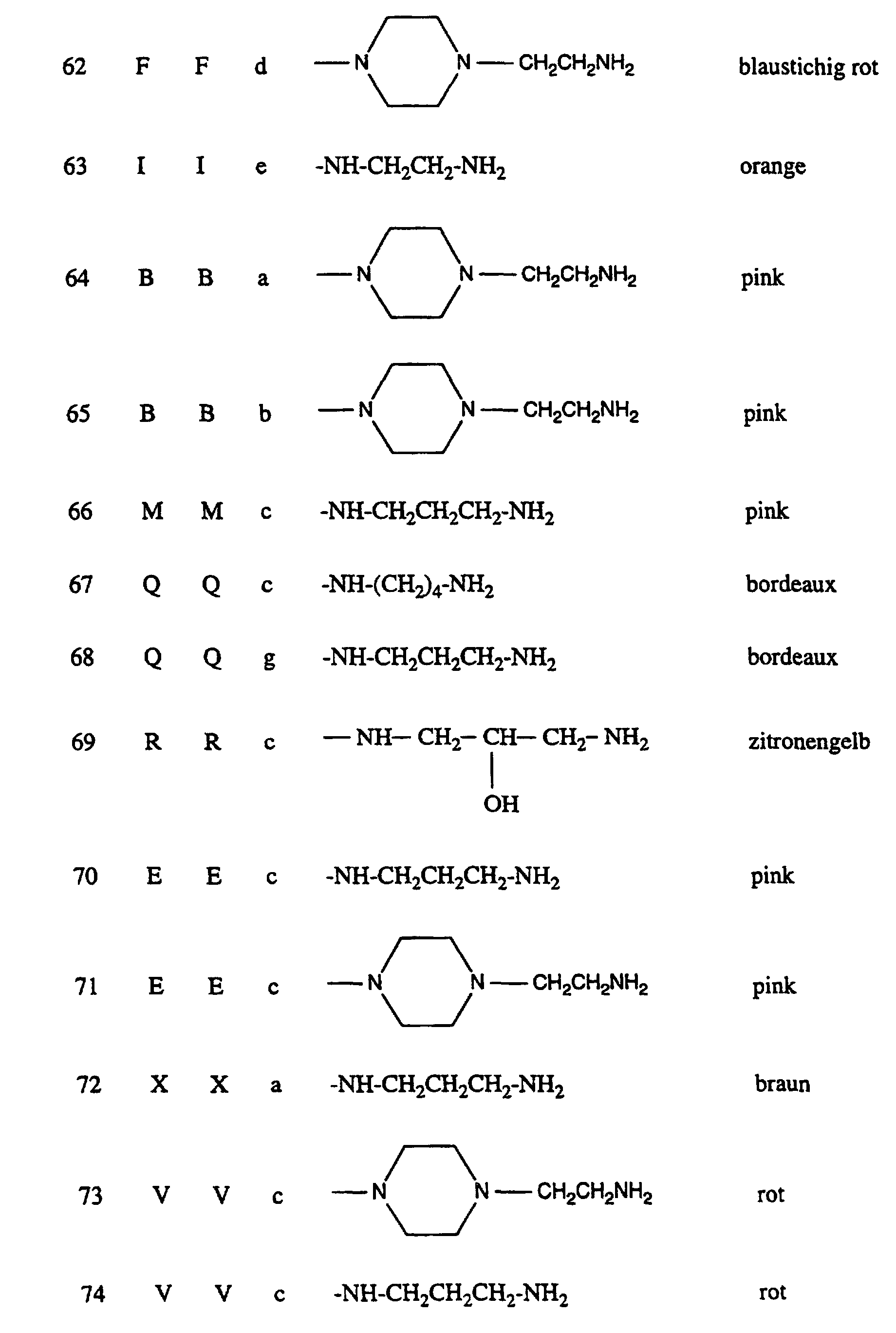

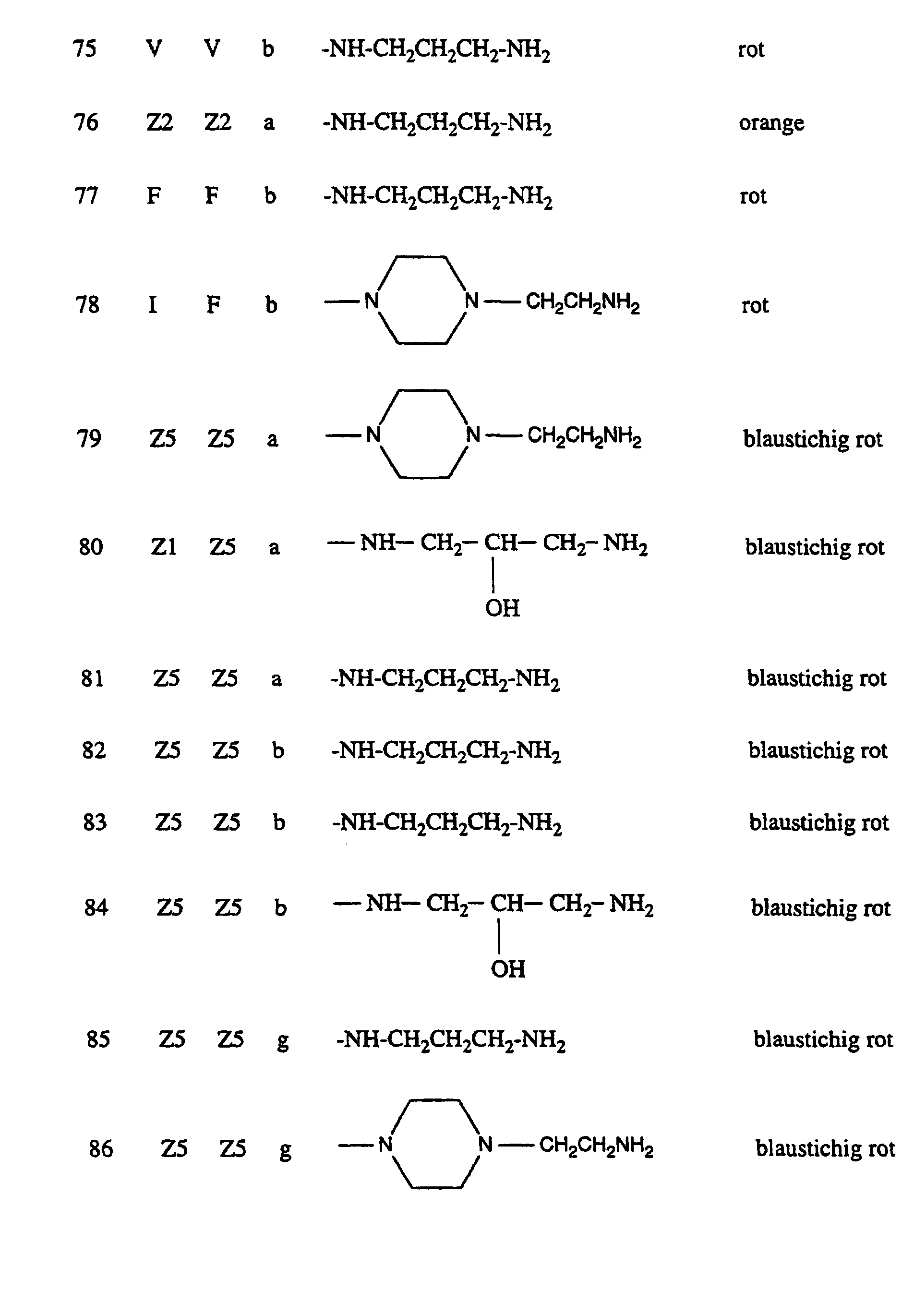

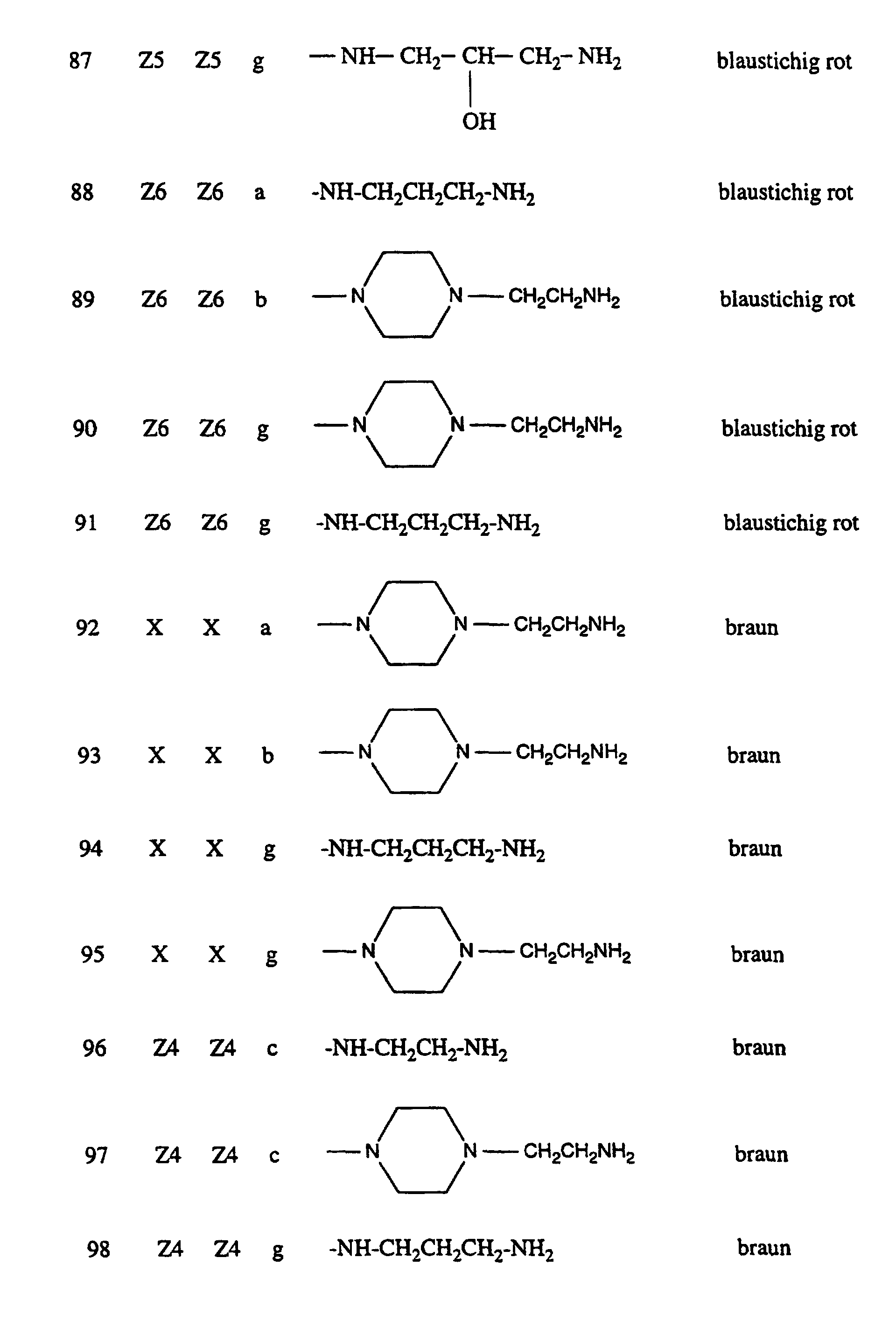

### Färbevorschrift 1

10 Teile Baumwollgewebe (gebleicht und mercerisiert) werden bei ca. 30°C in ein Färbebad eingebracht, welches 200 Teile Wasser und 0,35 Teile Farbstoff des Beispiels 1 enthält. Die Flotte wird innerhalb von 30 Minuten auf 95°C erhitzt und 15 Minuten bei dieser Temperatur belassen. Dann werden 4 Teile Natriumsulfat zugesetzt und noch weitere 45 Minuten bei 95°C gefärbt. Danach wird das Färbebad innerhalb von 15 Minuten auf 80°C abgekühlt und noch 15 Minuten bei dieser Temperatur belassen. Die Färbung wird dann gründlich mit kaltem Wasser gespült und getrocknet.

### Färbevorschrift 2

Man verfährt wie in der Färbevorschrift 1 beschrieben, gibt jedoch nach Abschluss des Färbevorgangs die kalt gespülte Färbung in ein frisches ca. 30°C warmes Bad, welches 200 Teile Wasser und 0,2-0,6 Teile eines kationischen Nachbehandlungsmittels (Amin-Formaldehyd-Dicyandiamid-Kondensationsprodukt oder Zubereitung auf der Basis von Dicyandiamid und Diäthylentriamin) enthält. Die Färbung wird 30 Minuten bei 30°C nachbehandelt und anschliessend ohne weiteren Spülprozess getrocknet; man erhält eine Färbung mit verbesserten Nassechtheiten.

### Färbevorschrift 3

Man verfährt wie in der Färbevorschrifte 1 beschrieben, gibt jedoch nach Abschluss des Färbevorgangs die kalt gespülte Färbung in ein frisches ca. 25°C warmes Bad, welches 200 Teile Wasser, 1 Teil Natriumsulfat und 0,6 Teile eines faserreaktiven kationischen Nachbehandlungsmittels auf Basis von N-Methyldialkylamin und Epichlorhydrin enthält. Die Temperatur wird innerhalb von 15 Minuten auf 40°C erhöht, 0,8 Teile 30%ige Natriumhydroxidlösung zugegeben und die Färbung weitere 45 Minuten bei 40°C behandelt. Die Färbung wird schliesslich heiss gespült und getrocknet; sie weist verbesserte Nassechtheiten auf.

## Patentansprüche

1. Anionische Säurefarbstoffe der Formel 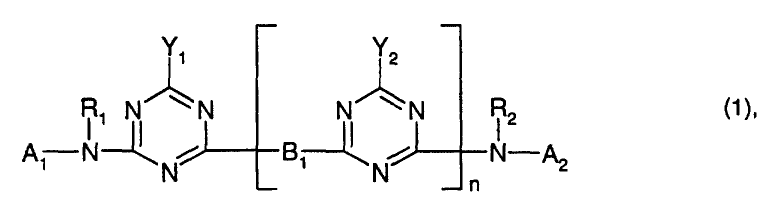 worin
R₁ und R₂ unabhängig voneinander Wasserstoff oder C₁-C₄-Alkyl bedeuten,
B₁ ein Brückenglied der Formel
- NR₉ - E₂ - NR₁₀ - (5a), 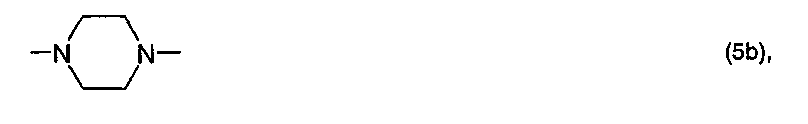 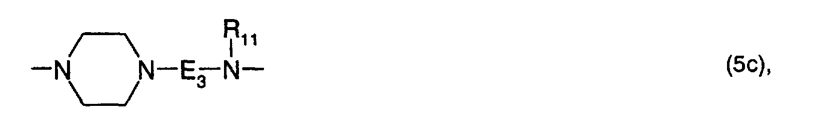 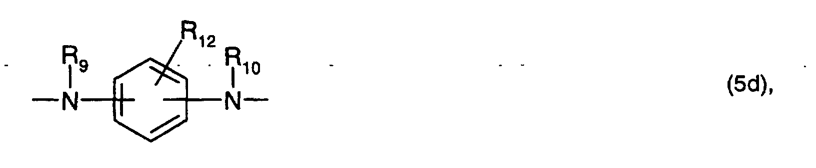 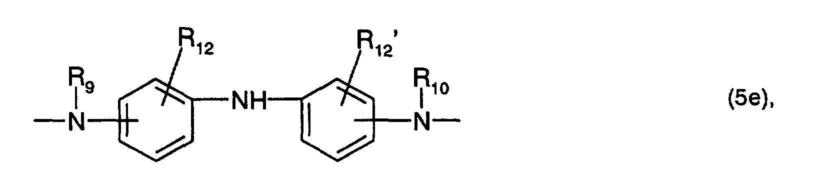 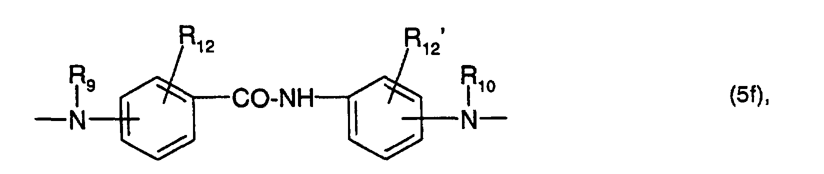 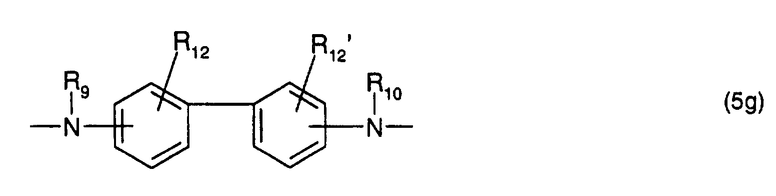
oder 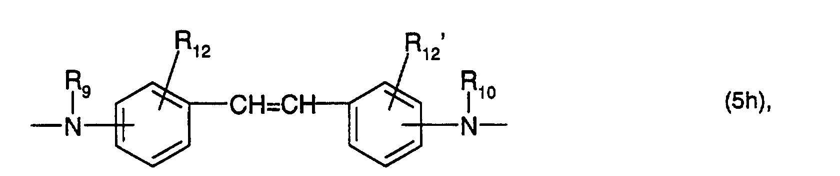
A₁ und A₂ unabhängig voneinander einen Rest der Formel 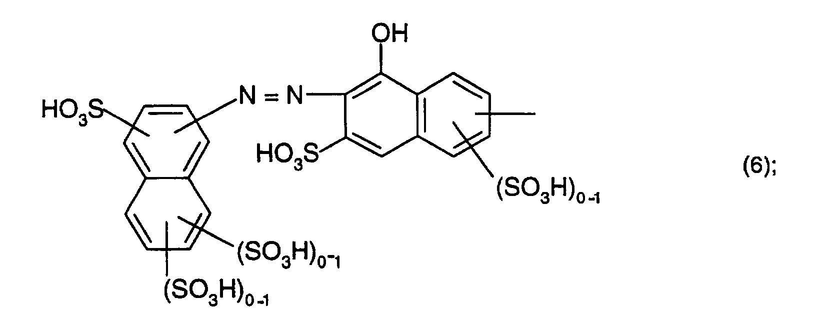 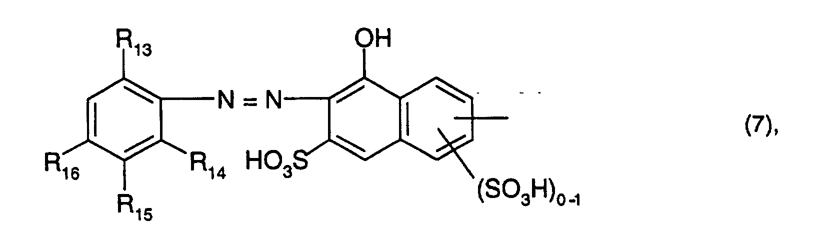 worin R₁₃, R₁₄, R₁₅ und R₁₆ unabhängig voneinander Wasserstoff, Sulfo, Carboxy, Carbamoyl, Halogen, Cyano, Ureido, unsubstituiertes oder durch Hydroxy substituiertes C₁-C₄-Al-kyl oder C₁-C₄-Alkoxy, oder unsubstituiertes oder im Alkylteil durch Hydroxy oder C₁-C₄-Alkoxy substituiertes C₂-C₄-Alkanoylamino bedeuten; 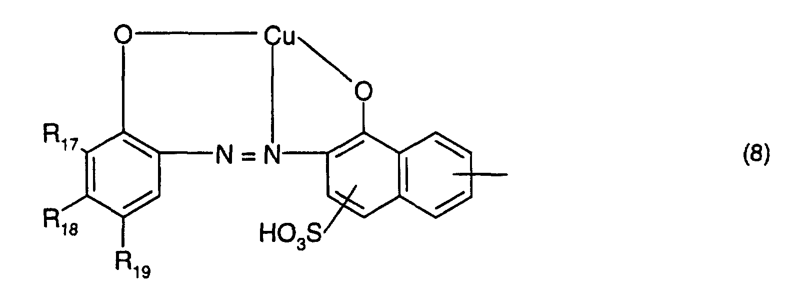 worin R₁₇, R₁₈ und R₁₉ die oben für R₁₃, R₁₄, R₁₅ und R₁₆ angegebenen Bedeutungen haben; 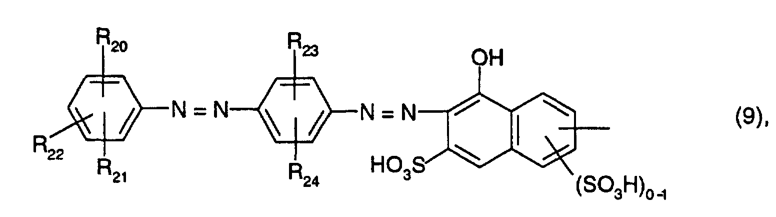 worin R₂₀, R₂₁, R₂₂, R₂₃ und R₂₄ die oben für R₁₃, R₁₄, R₁₅ und R₁₆ angegebenen Bedeutungen haben; 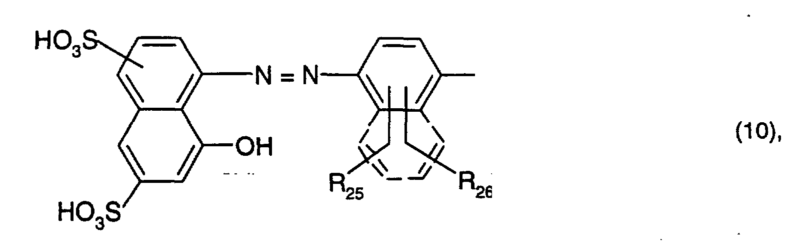 worin R₂₅ und R₂₆ die oben für R₁₃, R₁₄, R₁₅ und R₁₆ angegebenen Bedeutungen haben; 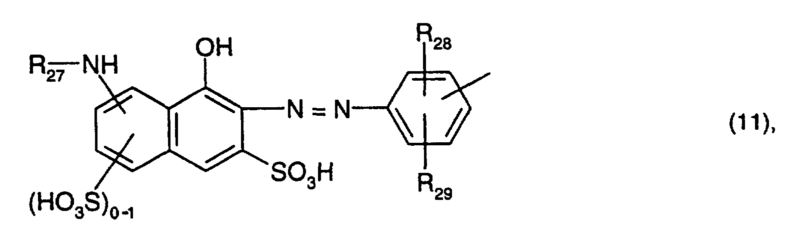 worin R₂₇ Wasserstoff, gegebenenfalls durch Hydroxy oder C₁-C₄-Alkoxy substituiertes C₂-C₆-Alkanoyl, oder gegebenenfalls im Phenylring durch C₁-C₄-Alkyl, C₁-C₄-Alkoxy, C₂-C₄-Alkanoylamino, Sulfo, Carboxy, Halogen, Cyano oder Ureido substituiertes Phenyl oder Benzoyl ist und R₂₈ und R₂₉ die oben für R₁₃, R₁₄, R₁₅ und R₁₆ angegebenen Bedeutungen haben; 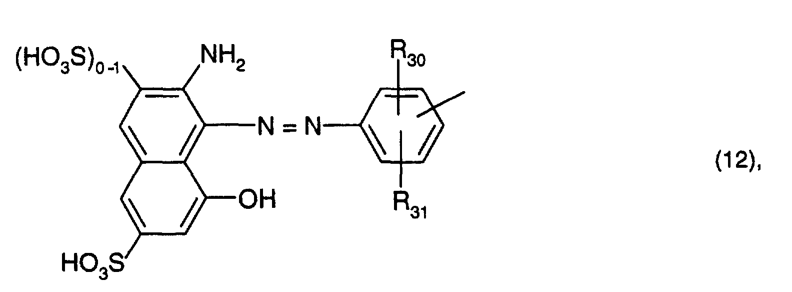 worin R₃₀ und R₃₁ die oben für R₁₃, R₁₄, R₁₅ und R₁₆ angegebenen Bedeutungen haben; 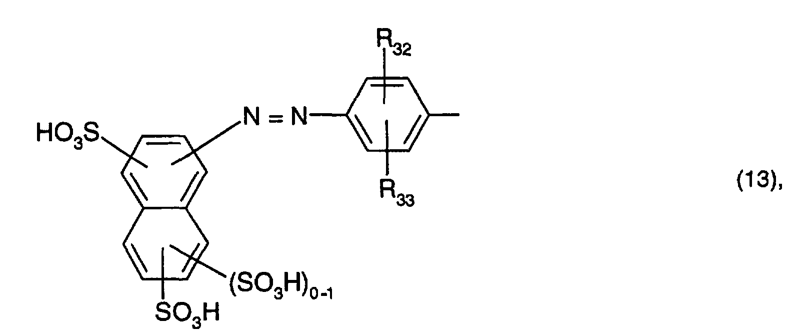 worin R₃₂ und R₃₃ die oben für R₁₃, R₁₄, R₁₅ und R₁₆ angegebenen Bedeutungen haben; 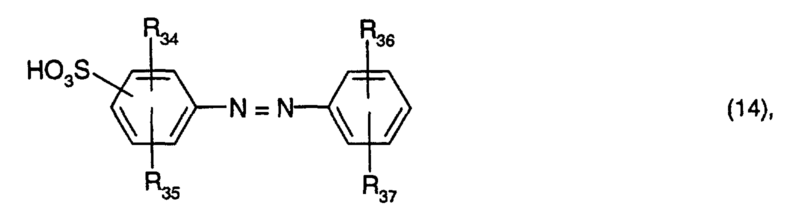 worin R₃₄, R₃₅, R₃₆ und R₃₇ die oben für R₁₃, R₁₄, R₁₅ und R₁₆ angegebenen Bedeutungen haben; oder 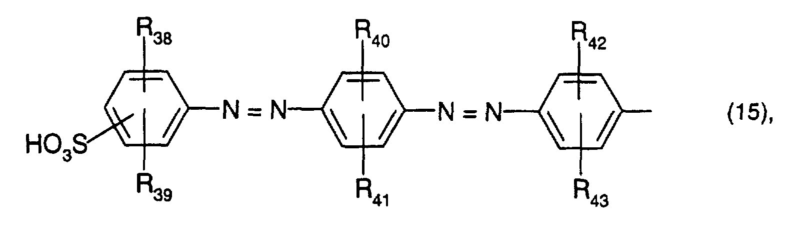 worin R₃₈, R₃₉, R₄₀, R₄₁, R₄₂ und R₄₃ die oben für R₁₃, R₁₄, R₁₅ und R₁₆ angegebenen Bedeutungen haben;
bedeuten,
n die Zahl 0 oder 1 ist, und
Y₁ und Y₂ unabhängig voneinander einen Rest der Formel 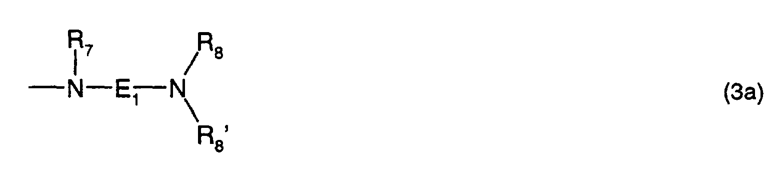 oder 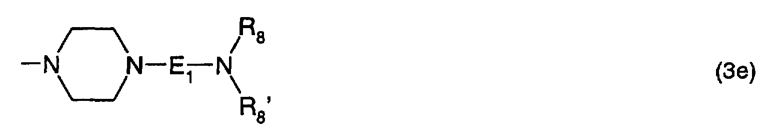 bedeuten, wobei
R₇ Wasserstoff oder ein unsubstituiertes oder durch Hydroxy, C₁-C₄-Alkoxy, Halogen, Amino oder Sulfato substituiertes C₁-C₄-Alkyl,
R₈ und R₈' Wasserstoff,
R₉, R₁₀ und R₁₁ unabhängig voneinander Wasserstoff oder gegebenenfalls durch Hydroxy oder C₁-C₄-Alkoxy substituiertes C₁-C₈-Alkyl sind,
R₁₂ und R₁₂' unabhängig voneinander für Wasserstoff, C₁-C₄-Alkyl, C₁-C₄-Alkoxy, C₂-C₄-Alkanoylamino, Halogen, Sulfo oder Carboxy stehen,
E₁ gegebenenfalls substituiertes und gegebenenfalls durch eine oder mehrere Gruppen -O-unterbrochenes C₂-C₈-Alkylen oder gegebenenfalls substituiertes C₅-C₇-Cycloalkylen, C₅-C₇-Cycloalkylen-C₁-C₈-Alkylen oder C₅-C₈-Alkylen-C₁-C₇-Cycloalkylen ist, und
E₂ und E₃ unabhängig voneinander gegebenenfalls durch Hydroxa oder C₁-C₄-Alkoxy substituiertes und gegebenenfalls durch eine oder mehrere Gruppen -O- unterbrochenes C₂-C₈-Al-kylen oder gegebenenfalls im Cycloalkylring durch C₁-C₄-Alkyl substituiertes C₅-C₇-Cycloalkylen, C₅-C₇-Cycloalkylen-C₁-C₈-Alkylen oder C₅-C₈-Alkylen-C₁-C₇-Cycloalkylen sind.

2. Anionische Farbstoffe gemäss Anspruch 1, worin R₁ und R₂ Wasserstoff bedeuten.

3. Anionische Farbstoffe gemäss einem der Ansprüche 1 und 2, worin n die Zahl 0 ist.

4. Anionische Farbstoffe gemäss einem der Ansprüche 1 bis 3, worin R₇ Wasserstoff oder ein unsubstituiertes oder durch Hydroxy oder C₁-C₄-Alkoxy substituiertes C₁-C₄-Alkyl, R₈ und R₈' Wasserstoff und E₁ gegebenenfalls durch Hydroxy oder C₁-C₄-Alkoxy substituiertes und gegebenenfalls durch eine oder mehrere Gruppen -O- unterbrochenes C₂-C₈-Alkylen oder gegebenenfalls im Cycloalkylring durch C₁-C₄-Alkyl substituiertes C₅-C₇-Cycloalkylen, C₅-C₇-Cycloalkylen-C₁-C₈-Alkylen oder C₅-C₈-Alkylen-C₁-C₇-Cycloalkylen sind.

5. Anionische Säurefarbstoffe gemäss Anspruch 1, worin A₁ und A₂ unabhängig voneinander einen Rest der Formel (6), (7), (8), (9), (10), (11), (12) oder (14) bedeuten.

6. Anionische Säurefarbstoffe gemäss Anspruch 5, worin A₁ und A₂ unabhängig voneinander einen Rest der Formel (6) oder (7) bedeuten.

7. Anionische Säurefarbstoffe gemäss Anspruch 1, worin n die Zahl 0 ist, R₇ Wasserstoff oder ein unsubstituiertes oder durch Hydroxy oder C₁-C₄-Alkoxy substituiertes C₁-C₄-Alkyl ist, R₈ und R₈' Wasserstoff sind, E₁ gegebenenfalls durch Hydroxy oder C₁-C₄-Alkoxy substituiertes C₂-C₆-Alkylen ist und A₁ und A₂ unabhängig voneinander einen Rest der Formel (6), (7), (8), (9), (10), (11), (12) oder (14) bedeuten.

8. Anionische Säurefarbstoffe gemäss Anspruch 1, worin A₁ und A₂ identische Bedeutungen haben und einen Rest der Formel (6) oder (7) bedeuten.

9. Anionischer Farbstoff gemäss Anspruch 1 der Formel

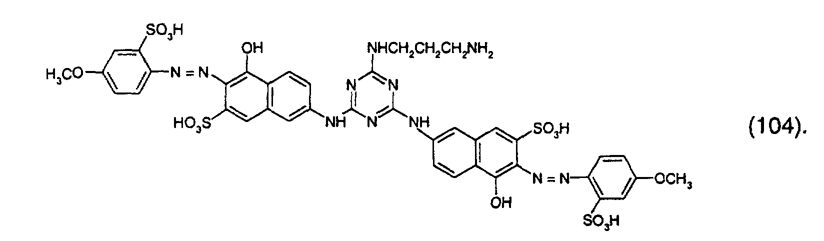

10. Anionischer Farbstoff gemäss Anspruch 1 der Formel

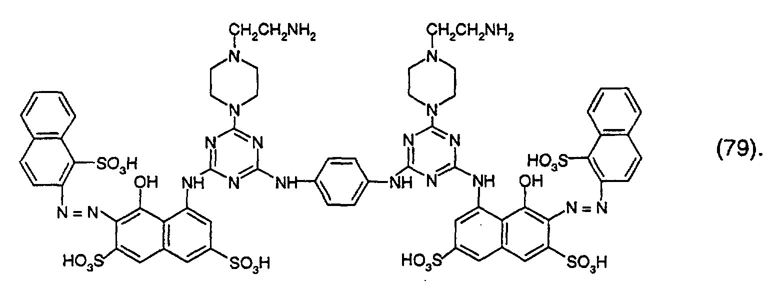

11. Verfahren zur Herstellung von anionischen Säurefarbstoffen der Formel (1) gemäss Anspruch 1, worin n die Zahl 0 bedeutet, dadurch gekennzeichnet, dass man eine Verbindung der Formel 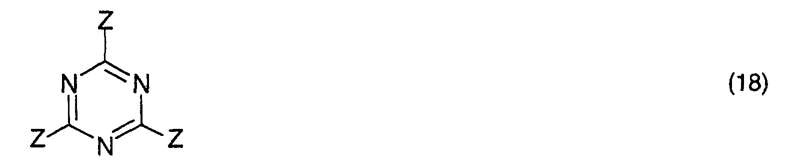 mit einer Verbindung der Formel
A₁ - NHR₁ (19a),
einer Verbindung der Formel
A₂ - NHR₂ (19b)
und einer Verbindung der Formel
Y₁ - H (20a)
umsetzt, worin A₁, A₂, R₁, R₂ und Y₁ jeweils die im Anspruch 1 angegebenen Bedeutungen haben und Z Halogen, vorzugsweise Chlor, bedeutet.

12. Verfahren zur Herstellung von anionischen Säurefarbstoffen der Formel (1) gemäss Anspruch 1, worin n die Zahl 1 bedeutet, dadurch gekennzeichnet, dass man
a) unabhängig voneinander eine Verbindung der Formel 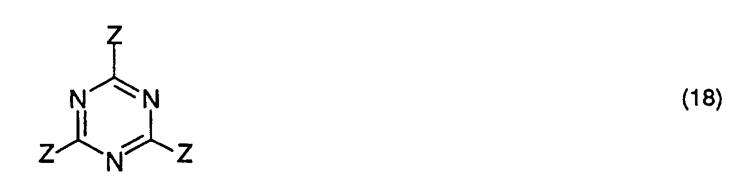 mit einer Verbindung der Formel
A₁ - NHR₁ (19a)
zur Verbindung der Formel 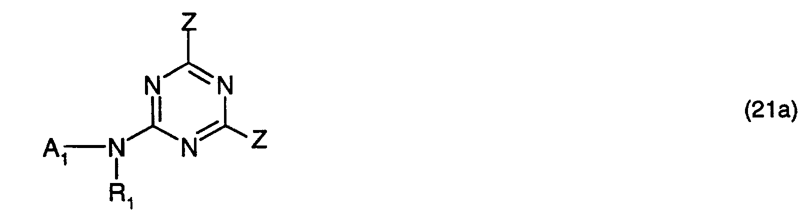 umsetzt und eine weitere Verbindung der Formel (18) mit einer Verbindung der Formel
A₂ - NHR₂ (19b)
zur Verbindung der Formel 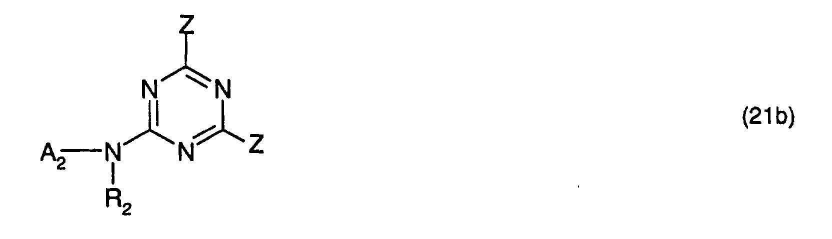 umsetzt,
b) eine Verbindung der Formel
H - B₁ - H (22a)
nacheinander in beliebiger Reihenfolge mit den gemäss a) erhältlichen Verbindungen der Formel (21a) und (21b) umsetzt, und
c) die gemäss b) erhältliche Verbindung der Formel 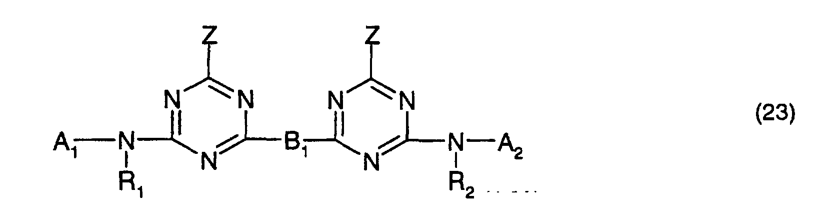 mit mindestens einer der Verbindungen der Formeln
Y₁ - H (20a) und Y₂ - H (20b)
umsetzt, worin A₁, A₂, R₁, R₂, Y₁, Y₂ und B₁ die jeweils die im Anspruch 1 angegebenen Bedeutungen haben und Z Halogen, vorzugsweise Chlor, bedeutet.

13. Verwendung der anionischen Säurefarbstoffe gemäss Anspruch 1 zum Färben oder Bedrucken von stickstoffhaltigen oder cellulosischen Fasermaterialien.

14. Verwendung gemäss Anspruch 13, dadurch gekennzeichnet, dass man Fasergemische aus Synthesefasern und cellulosischen Fasermaterialien, insbesondere Polyester/Baumwoll-Mischgewebe, in Gegenwart eines Dispersionsfarbstoffes für die Polyesterfasern unter den Färbebedingungen für Polyesterfasern färbt.

## Claims

1. An anionic acid dye of the formula 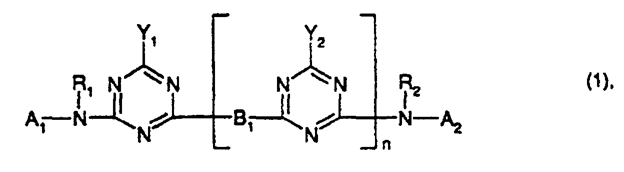 in which R₁ and R₂ independently of one another are hydrogen or C₁-C₄alkyl,
B₁ is a bridge member of the formula
-NR₉-E₂-NR₁₀- (5a), 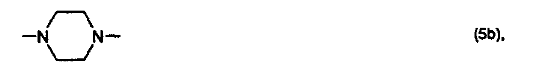 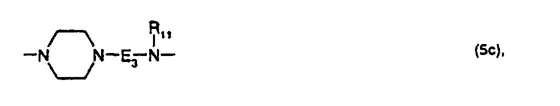 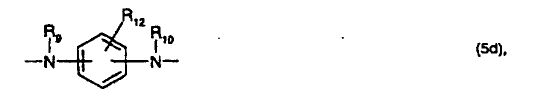 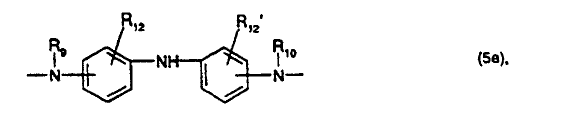 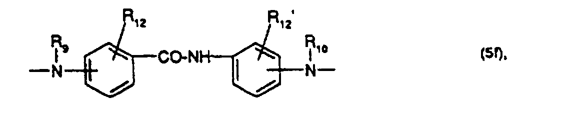 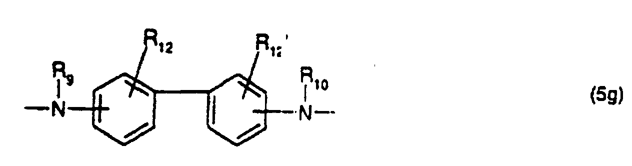
or 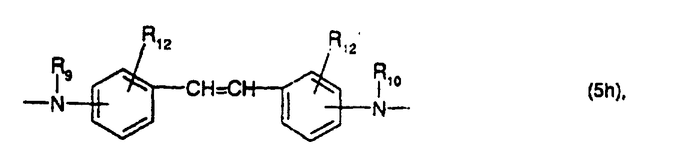
A₁ and A₂ independently of one another are a radical of the formula 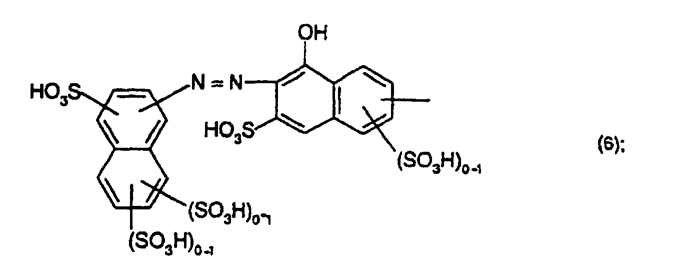 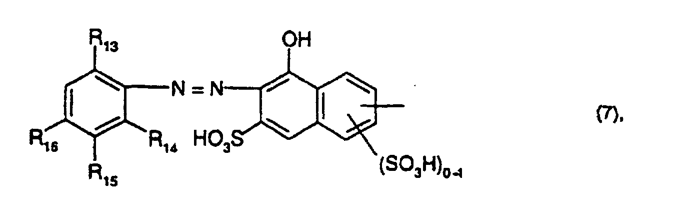 in which
R₁₃, R₁₄, R₁₅ and R₁₆ independently of one another are hydrogen sulfo, carboxyl, carbamoyl, halogen, cyano or ureido, C₁-C₄alkyl or C₁-C₄alkoxy which are unsubstituted or substituted by hydroxyl, or C₂-C₄alkanoylamino which is unsubstituted or substituted by hydroxyl or C₁-C₄alkoxy in the alkyl part; 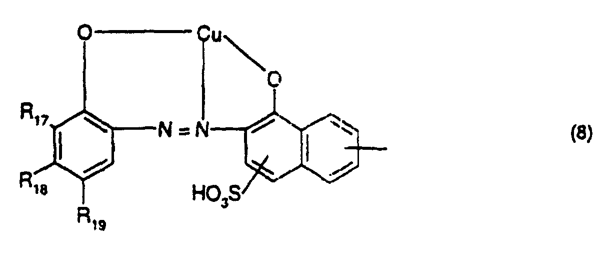 in which
R₁₇, R₁₈ and R₁₉ have the definitions assigned above to R₁₃, R₁₄, R₁₅ and R₁₆; 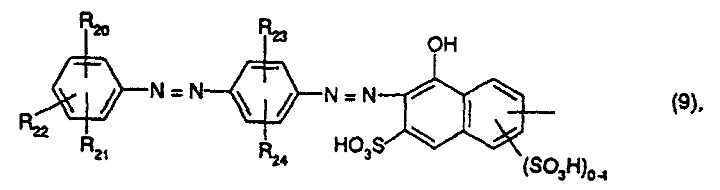 in which
R₂₀, R₂₁, R₂₂, R₂₃ and R₂₄ have the definitions assigned above to R₁₃, R₁₄, R₁₅ and R₁₆; 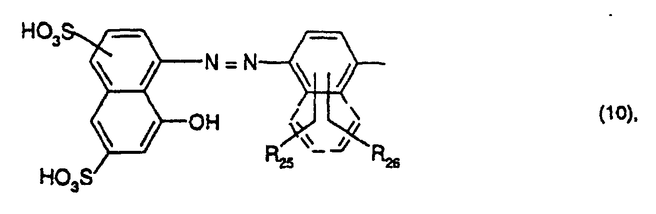 in which
R₂₅ and R₂₆ have the definitions assigned above to R₁₃, R₁₄, R₁₅ and R₁₆; 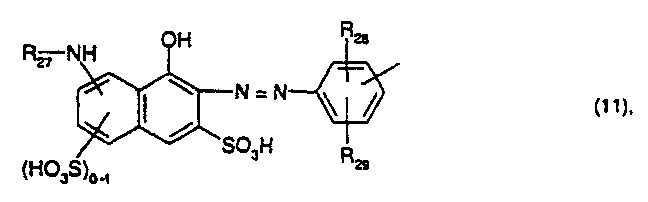 in which
R₂₇ is hydrogen, C₂-C₆alkanoyl which is unsubstituted or substituted by hydroxyl or C₁-C₄alkoxy, or phenyl or benzyl which are unsubstituted or substituted b C₁-C₄alkyl, C₁-C₄alkoxy, C₂-C₄alkanoylamino, sulfo carboxyl, halogen, cyano or ureido in the phenyl ring and
R₂₈ and R₂₉ have the definitions assigned above to R₁₃, R₁₄, R₁₅ and R₁₆; 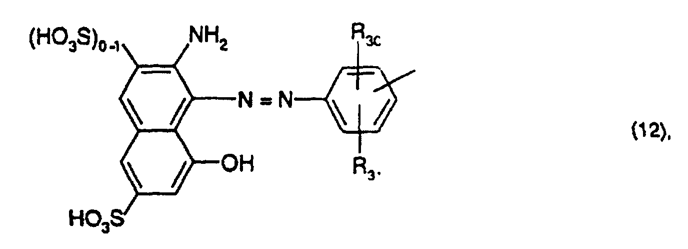 in which
R₃₀ and R₃₁ have the definitions assigned above to R₁₃, R₁₄, R₁₅ and R₁₆; 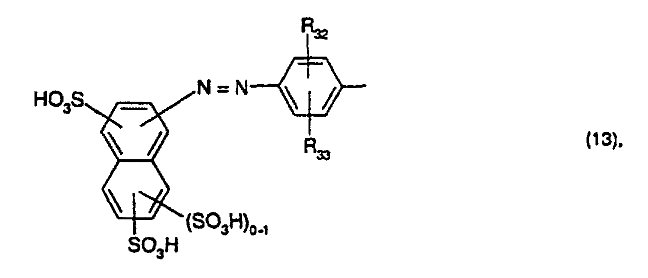 in which
R₃₂ and R₃₃ have the definitions assigned above to R₁₃, R₁₄, R₁₅ and R₁₆; 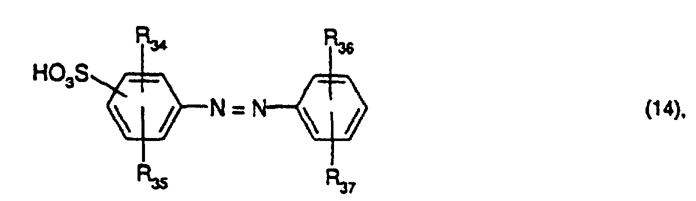 in which
R₃₃, R₃₅, R₃₆ and R₃₇ have the definitions assigned above to R₁₃, R₁₄, R₁₅ and R₁₆; or 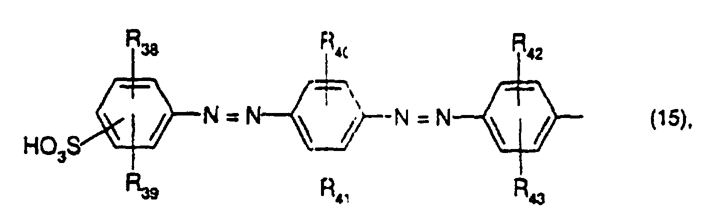 in which
R₃₈, R₃₉, R₄₀, R₄₁, R₄₂ and R₄₃ have the definitions assigned above to R₁₃, R₁₄, R₁₅ and R₁₆;
n is the number 0 or 1 and
Y₁ and Y₂ independently of one another are a radical of the formula 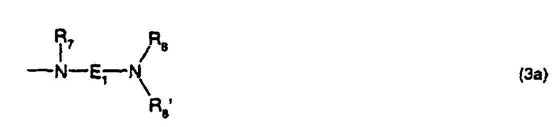 or 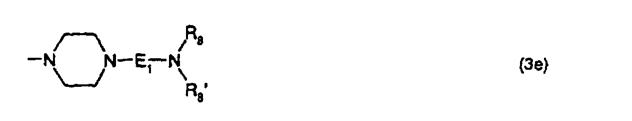 in which
R₇ is hydrogen or C₁-C₄alkyl which is unsubstituted or substituted by hydroxyl, C₁-C₄alkoxy, halogen, amino or sulfato,
R₈ and R₈' are hydrogen,
R₉, R₁₀ and R₁₁ independently of one another are hydrogen or C₁-C₈alkyl which is unsubstituted or substituted by hydroxyl or C₁-C₄alkoxy,
R₁₂ and R₁₂' independently of one another are hydrogen, C₁-C₄alkyl, C₁-C₄alkoxy, C₂-C₄alkanoylamino, halogen, sulfo or carboxyl,
E₁ is substituted or unsubstituted C₂-C₈alkylene which is uninterrupted or interrupted by one or more groups -O-, or substituted or unsubstituted C₅-C₇cycloalkylene, C₅-C₇cycloalkylene-C₁-C₈alkylene or C₅-C₈alkylene-C₁-C₇cycloalkylene and
E₂ and E₃ independently of one another are C₂-C₈alkylene which is unsubstituted or substituted by hydroxyl or C₁-C₄alkoxy and uninterrupted or interrupted by one or more groups -O-, or C₅-C₇cycloalkylene, C₅-C₇cycloalkylene-C₁-C₈alkylene or C₅-C₈alkylene-C₁-C₇cycloalkylene which are unsubstituted or substituted by C₁-C₄alkyl in the cycloalkyl ring.

2. An anionic dye according to claim 1, in which R₁ and R₂ are hydrogen.

3. An anionic dye according to either of claims 1 and 2, in which n is the number 0.

4. An anionic dye according to any one of claims 1 to 3, in which R₇ is hydrogen or C₁-C₄alkyl which is unsubstituted or substituted by hydroxyl or C₁-C₄alkoxy, R₈ and R₈' are hydrogen and E₁ is C₂-C₈alkylene which is unsubstituted or substituted by hydroxyl or C₁-C₄alkoxy and uninterrupted or interrupted by one or more groups -O-, or C₅-C₇cycloalkylene, C₅-C₇cycloalkylene-C₁-C₈alkylene or C₅-C₈alkylene-C₁-C₇cycloalkylene which are unsubstituted or substituted by C₁-C₄alkyl in the cycloalkyl ring.

5. An anionic acid dye according to claim 1, in which A₁ and A₂ independently of one another are a radical of the formula (6), (7), (8), (9), (10), (11), (12) or (14).

6. An anionic acid dye according to claim 5, in which A₁ and A₂ independently of one another are a radical of the formula (6) or (7).

7. An anionic acid dye according to claim 1, in which n is the number 0, R₇ is hydrogen or C₁-C₄alkyl which is unsubstituted or substituted by hydroxyl or C₁-C₄alkoxy, R₈ and R₈' are hydrogen, E₁ is C₂-C₈alkylene which is unsubstituted or substituted by hydroxyl or C₁-C₄alkoxy and A₁ and A₂ independently of one another are a radical of the formula (6), (7), (8), (9), (10), (11), (12) or (14).

8. An anionic acid dye according to claim 1, in which A₁ and A₂ have identical meanings and are a radical of the formula (6) or (7).

9. An anionic dye according to claim 1 of the formula

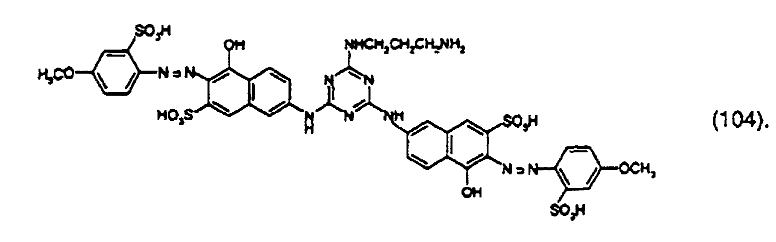

10. An anionic dye according to claim 1 of the formula

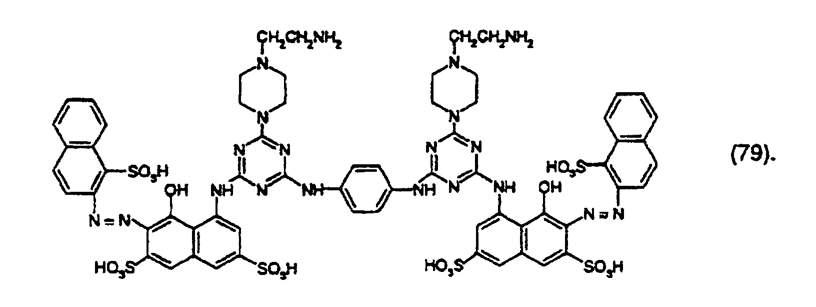

11. A process for the preparation of an anionic acid dye of the formula (1) according to claim 1, in which
n is the number 0,
which comprises reacting a compound of the formula 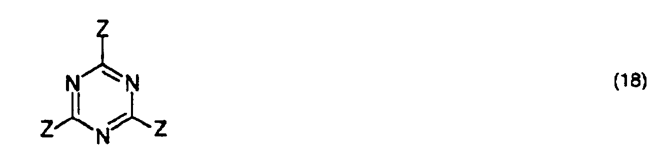 with a compound of the formula
A₁-NHR₁ (19a),
a compound of the formula
A₂-NHR₂ (19b)
and a compound of the formula
Y₁-H (20a)
in which
A₁, A₂, R₁, R₂ and Y₁ are each as defined in claim 1 and
Z is halogen, preferably chlorine.

12. A process for the preparation of an anionic acid dye of the formula (1) according to claim 1, in which
n is the number 1, which comprises
a) reacting, independently of one another, a compound of the formula 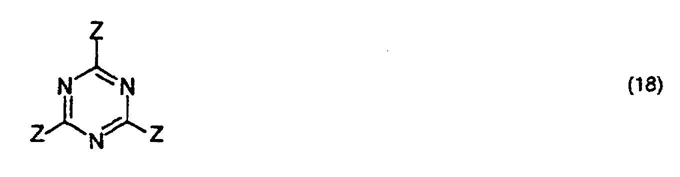 with a compound of the formula
A₁-NHR₁ (19a)
to give the compound of the formula 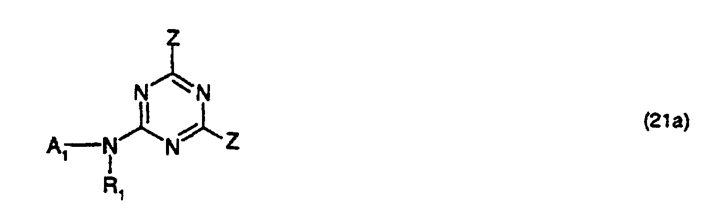 and reacting a further compound of the formula (18) with a compound of the formula
A₂-NHR₂ (19b)
to give the compound of the formula 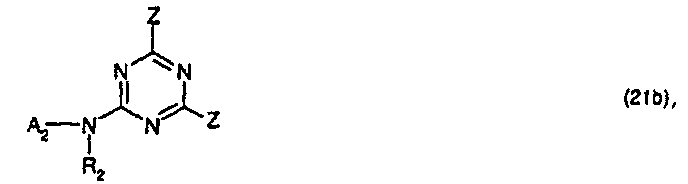
b) reacting a compound of the formula
H-B₁-H (22a)
in succession, in any sequence, with the compounds of the formula (21a) and (21b) obtainable according to a) and
c) reacting the compound obtainable according to b) of the formula 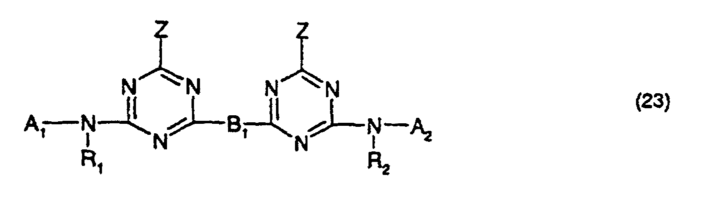 with at least one of the compounds of the formulae
Y₁-H (20a) and Y₂-H (20b)
in which
A₁, A₂, R₁, R₂, Y₁, Y₂ and B₁ are each as defined in claim 1 and
Z is halogen, preferably chlorine.

13. The use of an anionic acid dye according to claim 1 for dyeing or printing nitrogen-containing or cellulosic fibre materials.

14. The use according to claim 13, which comprises dyeing fibre mixtures of synthetic fibres and cellulosic fibre material, in particular polyester/cotton blend fabrics, under the dyeing conditions for polyester fibres in the presence of a disperse dye for the polyester fibres.

## Revendications

1. Colorants acides anioniques de formule 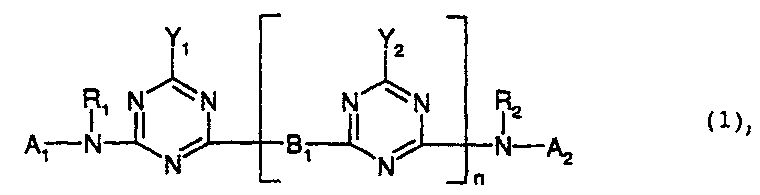
où R₁ et R₂ représentent, indépendamment l'un de l'autre, un atome d'hydrogène ou un groupe alkyle en C₁-C₄,
B₁ représente un élément de pontage de formule
-NR₉-E₂-NR₁₀- (5a), 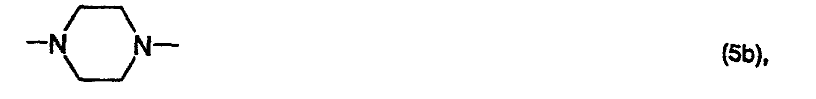 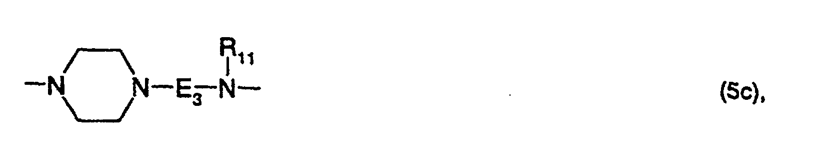 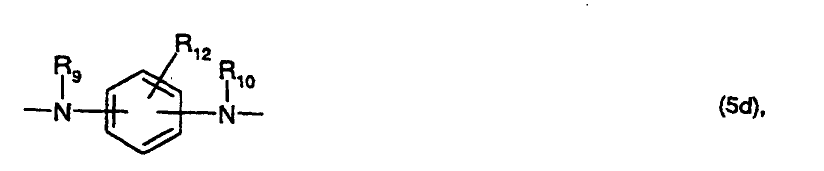 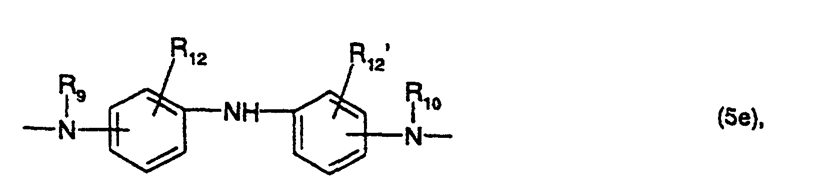 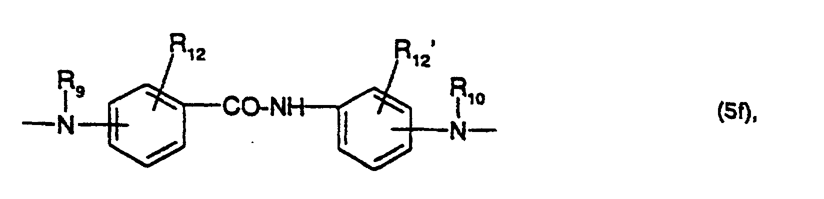 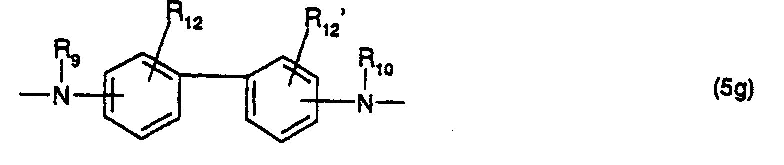
ou 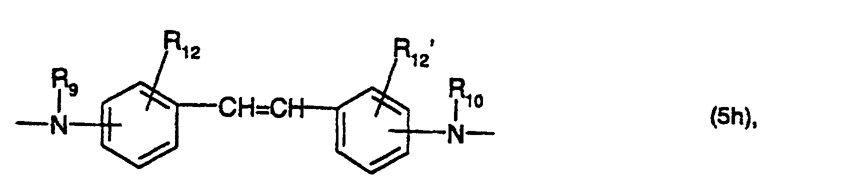
A₁ et A₂ représentent, indépendamment l'un de l'autre un reste de formule 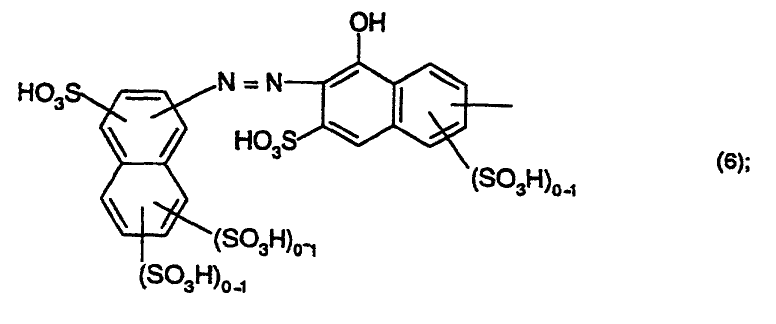 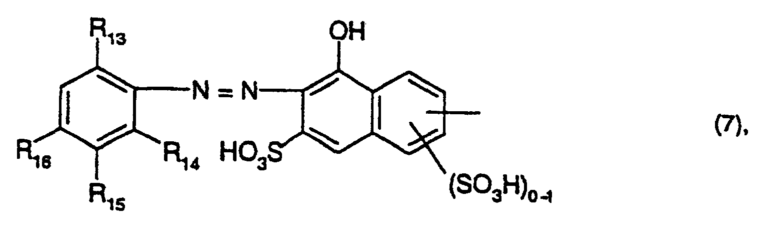
où R₁₃, R₁₄, R₁₅ et R₁₆ représentent, indépendamment les uns des autres, des atomes d'hydrogène, des groupes sulfo, carboxy, carbamoyle, halogène, cyano, uréido, alkyle en C₁-C₄ ou alkoxy en C₁-C₄ non substitué ou substitué par un substituant hydroxy, ou (alcanoyl en C₂-C₄)amino non substitué ou substitué dans le fragment alkyle par des substituants hydroxy ou alkoxy en C₁-C₄ ; 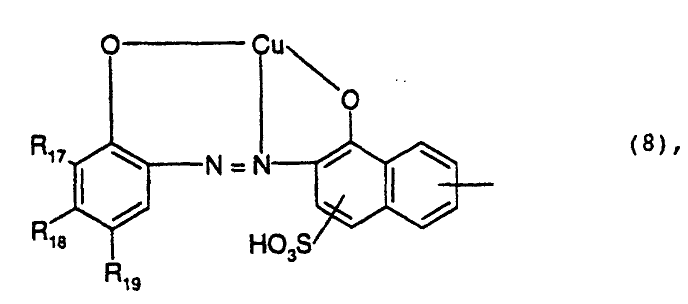
où R₁₇, R₁₈ et R₁₉ possèdent les significations données ci-dessus pour R₁₃, R₁₄, R₁₅ et R₁₆ ; 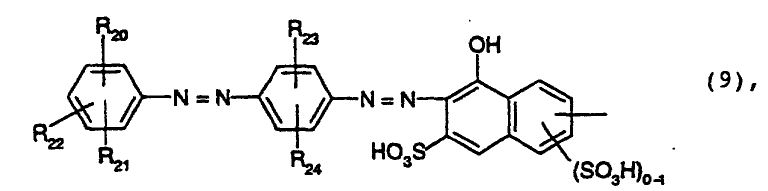
où R₂₀, R₂₁, R₂₂, R₂₃ et R₂₄ possèdent les significations données ci-dessus pour R₁₃, R₁₄, R₁₅ et R₁₆; 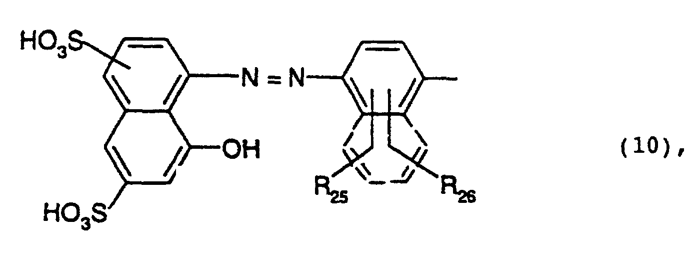
où R₂₅ et R₂₆ possèdent les significations données ci-dessus pour R₁₃, R₁₄, R₁₅ et R₁₆ 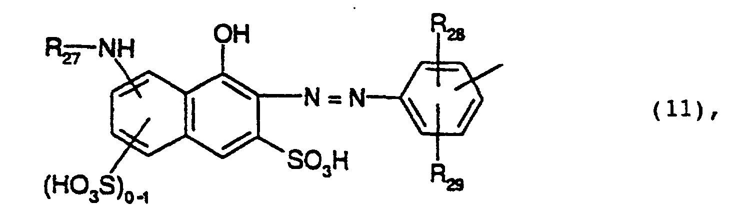
où R₂₇ représente un atome d'hydrogène, un groupe alcanoyl en C₂-C₆ éventuellement substitué par des substituants hydroxy ou alkoxy en C₁-C₄, ou phényle ou benzoyle éventuellement substitué sur le cycle phényle par des substituants alkyle en C₁-C₄, alkoxy en C₁-C₄, (alcanoyl en C₂-C₄)amino, sulfo, carboxy, halogène, cyano ou uréido, et R₂₈ et R₂₉ possèdent les significations données ci-dessus pour R₁₃, R₁₄, R₁₅ et R₁₆ ; 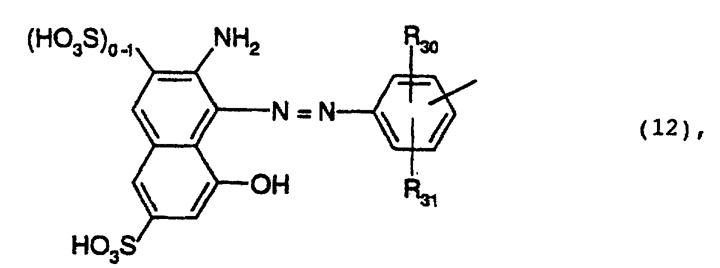
où R₃₀ et R₃₁ possèdent les significations données ci-dessus pour R₁₃, R₁₄, R₁₅ et R₁₆ ; 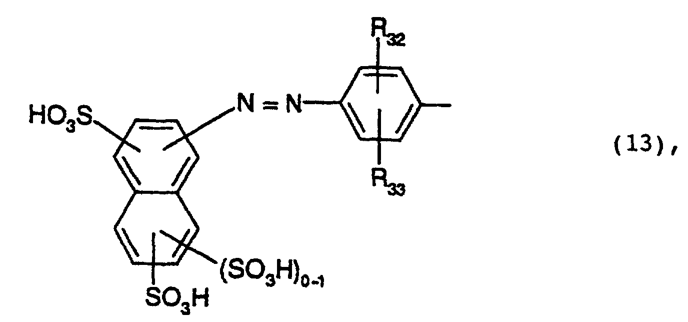
où R₃₂ et R₃₃ possèdent les significations données ci-dessus pour R₁₃, R₁₄, R₁₅ et R₁₆ ; 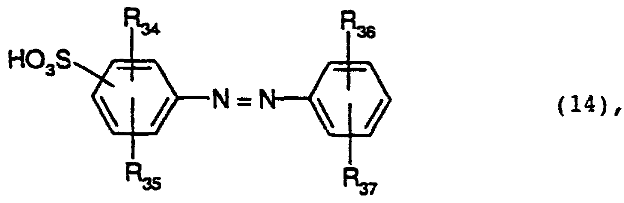
où R₃₄, R₃₅, R₃₆ et R₃₇ possèdent les significations données ci-dessus pour R₁₃, R₁₄, R₁₅ et R₁₆ ; ou 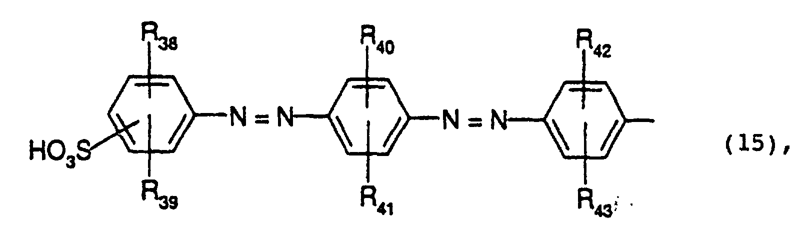
où R₃₈, R₃₉, R₄₀, R₄₁, R₄₂ et R₄₃ possèdent les significations données ci-dessus pour R₁₃, R₁₄, R₁₅ et R₁₆ ;
n vaut 0 ou 1 et
Y₁ et Y₂ représentent, indépendamment l'un de l'autre, un reste de formule 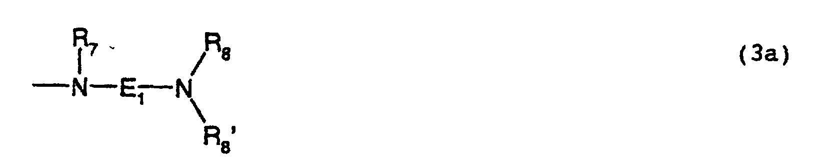 ou 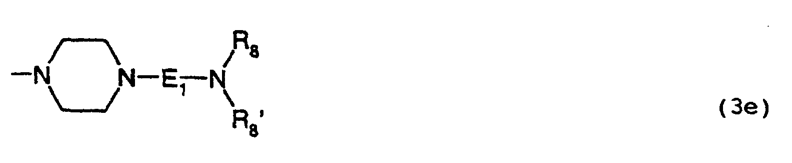
où R₇ représente un atome d'hydrogène ou un groupe alkyle en C₁-C₈ non substitué ou substitué par des substituants hydroxy, alkoxy en C₁-C₄, halogène, amino ou sulfato,
R₈ et R'₈ représentent un atome d'hydrogène et
R₉, R₁₀ et R₁₁ représentent, indépendamment les uns des autres, des atomes d'hydrogène ou des groupes alkyle en C₁-C₈ éventuellement substitué par des substituants hydroxy ou alkoxy en C₁-C₄,
R₁₂ et R₁₂ représentent, indépendamment l'un de l'autre, des atomes d'hydrogène, des groupes alkyle en C₁-C₄, alkoxy en C₁-C₄, (alcanoyl en C₂-C₄)amino, halogène, sulfo ou carboxy et
E₁ représente un groupe alkylène en C₂-C₈ éventuellement substitué et éventuellement interrompu par un ou plusieurs groupes -O- ou représente des groupes cycloalkylène en C₅-C₇, (cycloalkylène en C₅-C₇)-alkylène en C₁-C₈ ou (alkylène en C₁-C₈)-cycloalkylène en C₅-C₇ éventuellement substitué,
E₂ et E₃ représentent, indépendamment l'un de l'autre, un groupe alkylène en C₂-C₈ éventuellement substitué par des substituants hydroxy ou alkoxy en C₁-C₄ et éventuellement interrompu par un ou plusieurs groupes -O- ou représentent des groupes cycloalkylène en C₅-C₇, (cycloalkylène en C₅-C₇)-alkylène en C₁-C₈ ou (alkylène en C₁-C₈)-cycloalkylène en C₅-C₇ éventuellement substitué dans le cycle cycloalkyle par un substituant alkyle en C₁-C₄.

2. Colorants anioniques selon la revendication 1, où R₁ et R₂ représentent un atome d'hydrogène.

3. Colorants anioniques selon l'une des revendications 1 et 2, où n vaut 0.

4. Colorants anioniques selon l'une des revendications 1 à 3, où R₇ représente un atome d'hydrogène ou un groupe alkyle en C₁-C₄ non substitué ou substitué par des substituants hydroxy, alkoxy en C₁-C₄, R₈ et R'₈ représentent un atome d'hydrogène et E₁ représente un groupe alkylène en C₂-C₈ éventuellement substitué et éventuellement interrompu par un ou plusieurs groupes -O- ou cycloalkylène en C₅-C₇, (cycloalkylène en C₅-C₇)-alkylène en C₁-C₈ ou (alkylène en C₁-C₈)-cycloalkylène en C₅-C₇ éventuellement substitué dans le cycle cycloalkyle par un substituant alkyle en C₁-C₄.

5. Colorants acides anioniques selon la revendication 1, où A₁ et A₂ représentent indépendamment l'un de l'autre un reste de formule (6), (7), (8), (9), (10), (11), (12) ou (14).

6. Colorants acides anioniques selon la revendication 5, où A₁ et A₂ représentent indépendamment l'un de l'autre un reste de formule (6) ou (7).

7. Colorants acides anioniques selon la revendication 1, où n vaut 0, R₇ représente un atome d'hydrogène ou un groupe alkyle en C₁-C₄ non substitué ou substitué par des substituants hydroxy ou alkoxy en C₁-C₄, R₈ et R'₈ représentent un atome d'hydrogène et E₁ représente un groupe alkylène en C₂-C₈ éventuellement substitué par des substituants hydroxy ou alkoxy en C₁-C₄ et A₁ et A₂ représentent indépendamment l'un de l'autre un reste de formule (6), (7), (8), (9), (10), (11), (12) ou (14).s

8. Colorants acides anioniques selon la revendication 1, où A₁ et A₂ possèdent des significations identiques et représentent un reste de formule (6) ou (7).

9. Colorants anioniques selon la revendication 1 de formule

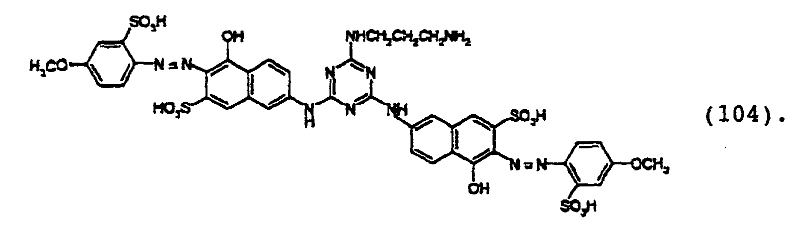

10. Colorant anionique selon la revendication 1 de formule

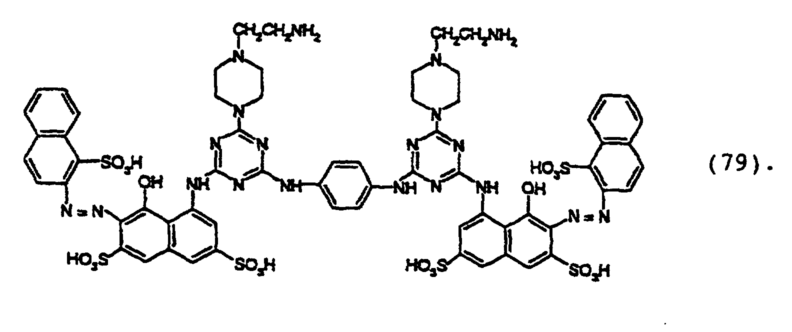

11. Procédé pour la préparation de colorants acides anioniques de formule (1) selon la revendication 1, où n vaut 0, caractérisés en ce qu'on fait réagir un composé de formule 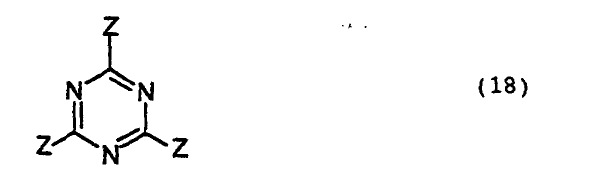 avec un composé de formule
A₁-NHR₁ (19a),
un composé de formule
A₂-NHR₂ (19b),
et un composé de formule
Y₁-H (20a),
où A₁, A₂, R₁, R₂ et Y₁ possèdent chacun les significations données à la revendication (1) et Z représente un atome d'halogène, de préférence un atome de chlore.

12. Procédé pour la préparation de colorants acides anioniques de formule (1) selon la revendication 1, où n vaut 1, caractérisés en ce qu'on fait réagir
a) indépendamment l'un de l'autre, un composé de formule 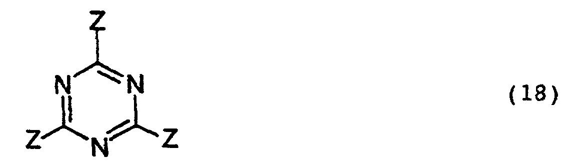 avec un composé de formule
A₁-NHR₁ (19a),
pour obtenir un composé de formule 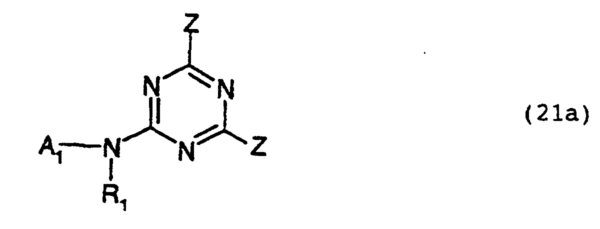 et on fait réagir un autre composé de formule (18) avec un composé de formule
A₂-NHR₂ (19b),
pour obtenir un composé de formule 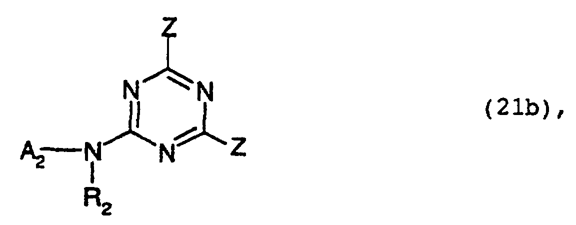
b) on fait réagir un composé de formule
H-B₁-N-H (22a),
l'un après l'autre dans une succession arbitraire avec les composés que l'on peut obtenir selon a) de formule (21a) et (21b) et
c) on fait réagir le composé que l'on peut obtenir selon b) de formule 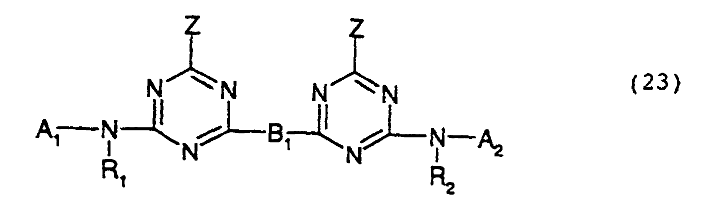 avec au moins un des composés de formules
Y₁-H (20a) et Y₁-H (20a),
où A₁, A₂, R₁, R₂, Y₁, Y₂ et B₁ possèdent chacun la signification donnée à la formule (1) et Z représente un atome d'halogène, de préférence le chlore.

13. Utilisation des colorants acides anioniques selon la revendication 1 pour la teinture ou l'impression de matières fibreuses azotées ou cellulosiques.

14. Utilisation selon la revendication 13, caractérisée en ce qu'on teint des mélanges fibreux de fibres synthétiques et de matières fibreuses cellulosiques, en particulier des tissus mixtes polyester/coton, en présence d'un colorant dispersé pour les fibres polyester sous les conditions de teintures pour fibres polyester.
